# FASCICULE DE BREVET EUROPEEN

(11) **EP 1 121 811 B1**
(45) Date de publication et mention de la délivrance du brevet: **21.05.2008**
(21) Numéro de dépôt: 99947558.5
(22) Date de dépôt: 12.10.1999
(51) Int. Cl.: H04N 7/58, H04N 5/265

(54) **PROCEDE DE BASCULEMENT DE LA OU DES COMPOSANTES VIDEO D'UN PREMIER PROGRAMME AUDIOVISUEL NUMERIQUE SUR LA OU LES COMPOSANTES VIDEO D'UN SECOND PROGRAMME AUDIOVISUEL NUMERIQUE POUR COMPENSER LEUR DEPHASAGE**
VIDEOKOMPONENTANBINDUNGSVERFAHREN FÜR ZWEI NUMERISCHE BILDTONPROGRAMME
METHOD FOR SWITCHING VIDEO COMPONENT(S) OF A FIRST AUDIO-VISUAL DIGITAL PROGRAMME ON THE VIDEO COMPONENT(S) OF A SECOND AUDIO-VISUAL DIGITAL PROGRAMME TO COMPENSATE PHASE-SHIFT

(30) Priorité: 14.10.1998 FR 9812973
(43) Date de publication de la demande: 08.08.2001
(73) Titulaire: FRANCE TELECOM, 75015 Paris (FR); TDF, 75015 Paris (FR)
(72) Inventeur: CURET, Dominique, F-35235 Thorigne Fouillard (FR); VEILLARD, Michel, F-35170 Bruz (FR); LOLIVIER, Germain, F-35700 Rennes (FR); GARAULT, Thérèse, F-35136 St Jacques de la Lande (FR); HELLEGOUARCH, Gérard, F-35510 Cesson-Sevigne (FR); DOUTEAU, André, F-35310 Chavagne (FR); RELIER, Stéphanie, F-35700 Rennes (FR); MADEC, Gérard, F-35250 Chasne-sur-Illet (FR)
(74) Mandataire: Maillet, Alain
(86) Numéro de dépôt international: PCT/FR1999/002469
(87) Numéro de publication internationale: WO 2000/022835

(56) Documents cités:
- WO-A-98/32281
- J. MITCHELL: "MPEG video compression standard" 1996 , CHAPMANN&HALL XP002098501 page 355, alinéa 3
- WEISS S M: "SWITCHING FACILITIES IN MPEG-2: NECESSARY BUT NOT SUFFICIENT" SMPTE JOURNAL, vol. 104, no. 12, 1 décembre 1995 (1995-12-01), pages 788-802, XP000543847

## Description

La présente invention concerne un procédé de basculement de la ou des composantes vidéo d'un premier programme audiovisuel numérique sur la ou les composantes vidéo d'un second programme audiovisuel numérique.

L'invention se situe dans le domaine des services audiovisuels numériques, dans lesquels des programmes numériques sont constitués d'au moins une composante vidéo et peuvent comporter plusieurs composantes vidéo, aucune ou plusieurs composantes audio, et aucune ou plusieurs composantes de données. Dans l'invention, seul le cas des composantes vidéo est considéré.

Parmi ces services audiovisuels numériques, on peut citer ceux qui appliquent la norme dite MPEG-2 (Moving Pictures Expert Group) ISO/IEC JTC1 *IS* 13818. Cette norme est décrite dans plusieurs documents correspondant chacun à une partie distincte (video, audio, system, conformance, etc...).

On comprendra cependant que la présente invention ne se limite pas à l'utilisation de cette norme particulière MPEG-2, mais concerne également des applications à tout service audiovisuel numérique.

Les parties audio et vidéo de la norme MPEG-2 décrivent la façon de coder numériquement les données vidéo et audio. La partie système de la norme MPEG-2 précise que les flux élémentaires compressés résultants sont mis sous forme de paquets de flux élémentaires dits PES (Packetized Elementary Stream) qui contiennent des données vidéo. Ces paquets PES peuvent être de taille fixe ou de taille variable.

De façon non limitative, dans la suite de la description, on considérera l'utilisation de paquets PES vidéo de taille variable, chaque paquet PES comportant une et une seule image et éventuellement des en-têtes de séquence ou de groupe d'images GOP, avec un alignement des images en début de paquet PES. Les paquets PES véhiculant un même flux élémentaire sont identifiés par un identificateur de flux dénommé Stream_Id.

La norme MPEG-2 système indique que les paquets PES (vidéo, audio ou données) peuvent être multiplexés, pour un usage local, avec entre autres des paquets PES de signalisation Un tel multiplex peut être stocké sur des disques du type de ceux qui sont connus sous le nom de disque DVD (Digital Versatile Disk) par exemple, s'il s'agit de la syntaxe MPEG-2 programme.

Selon la norme MPEG-2 système, le flux élémentaire mis sous la forme de paquets PES peut ensuite être découpé sous la forme de paquets de taille fixe nommés Paquets Transport (PT). Un tel paquet de taille fixe est identifié par un identificateur de paquet PID (Packet Identifier) Un flux de paquets PES de même identificateur de flux Stream_Id ne peut être véhiculé que dans des paquets transport ayant le même identificateur de paquet PID. Les paquets transport véhiculant un flux élémentaire particulier (et les paquets PES ayant une première fois découpé ce flux élémentaire) peuvent être multiplexés avec d'autres paquets de transport PT véhiculant d'autres flux élémentaires, mais aussi avec entre autres des paquets de transport PT contenant de la signalisation. Ces multiplex de paquets de transport PT sont alors utilisables pour la transmission, il s'agit de la syntaxe MPEG-2 transport.

La partie MPEG-2 système couvre donc deux syntaxes, la syntaxe MPEG-2 programme et la syntaxe MPEG-2 transport. La syntaxe MPEG-2 système est générique dans le sens où ces deux syntaxes sont convertibles l'une vers l'autre (et réciproquement) et dans le sens où elles sont adaptées à deux types d'application bien différents : le stockage d'un programme pour MPEG-2 programme et la transmission de un ou de plusieurs programmes pour MPEG-2 transport. L'invention s'applique entre autres à ces deux syntaxes.

Quant à la partie vidéo de la norme MPEG-2 vidéo, elle prévoit trois types d'image :
- les images Intra dites I (Intra-coded pictures) qui ne font référence à aucune autre image. Ce sont des images à taux de compression modéré. Leur codage n'implique pas l'utilisation de procédés d'estimation de mouvement,
- les images prédites dites P (Predictive-coded pictures) qui sont des images codées en utilisant des procédés de prédiction à estimation de mouvement à partir d'une image précédente, laquelle peut être une image de type I ou une image de type P,
- les images bidirectionnelles dites B (Bidirectionnally predictive-coded pictures) qui sont codées en utilisant des procédés de prédiction à estimation de mouvement à partir d'une image précédente (en terme d'affichage, on parle alors de prédiction avant) et/ou d'une image future (en terme d'affichage, on parle alors de prédiction arrière) qui sont de type I ou de type P.

La norme MPEG-2 vidéo prévoit six niveaux hiérarchiques pour la syntaxe d'un flux élémentaire vidéo : la séquence, le groupe d'images dit GOP (Group Of Pictures) qui est le seul niveau optionnel, l'image (qui est de type I, P ou B), la partie d'image (slice), le macrobloc et le bloc.

Une séquence vidéo débute par un en-tête de séquence qui est suivi d'un ou plusieurs ensembles d'images. Selon la norme MPEG-2, ces ensembles d'images peuvent être regroupés dans des groupes d'images GOP (non obligatoire). Un groupe d'images GOP est caractérisé par un en-tête de groupe d'images GOP situé avant les images. Dans l'ordre de transmission, un groupe d'images GOP débute par une image 1 (obligatoire) suivie d'un certain nombre d'images bidirectionnelles B et prédites P dans un ordre précis.

La taille habituelle des groupes d'images GOP étant de 12 images, les composantes vidéo des programmes sont constituées de suites de séquences avec un seul groupe d'images GOP par séquence. Par abus de langage, on appelle groupe d'images GOP, dans la suite du document, un en-tête de séquence suivi de un groupe d'images GOP de 12 images ou de plusieurs groupe d'images GOP plus petits.

Les images comportent un en-tête et des données constituées d'un certain nombre de tranches (slices en terminologie anglo-saxonne). Une tranche (slice) regroupe plusieurs macroblocs continus dans l'image. En télévision numérique classique (format 4:2:0), un macrobloc est l'association de quatre blocs de luminance, d'un bloc d'une première composante de chrominance pour les mêmes pixels et d'un bloc d'une seconde composante de chrominance toujours pour les mêmes pixels. Un bloc contient les données de carrés de huit par huit pixels.

L'exemple d'application de la présente invention qui est décrit ci-après se situe dans le cadre de la norme MPEG-2 niveau transport. Il concerne l'enchaînement de différents programmes de télévision. Il s'agit de basculer d'un premier programme choisi parmi un certain nombre de programmes d'un premier multiplex sur un second programme choisi parmi un certain nombre de programmes d'un second multiplex, pour éventuellement, basculer à nouveau du second programme vers le premier plus tard.

Ces opérations font intervenir deux multiplex de même syntaxe (par exemple syntaxe au niveau MPEG-2 transport ou syntaxe au niveau MPEG-2 programme) qui sont codés en temps réel ou sont lus à partir d'un système de stockage. L'exemple d'application de l'invention décrit ci-après se situe au niveau MPEG-2 transport, mais les opérations effectuées au niveau élémentaire et au niveau des paquets PES sont directement applicables à la norme MPEG-2 programme.

On pourra se reporter notamment au document de brevet WO-A-98 32 281 qui décrit une méthode pour réaliser des basculements à partir de flux d'informations numériques compressés, telles que des flux transport MPEG. En particulier, les flux qui sont mis en oeuvre dans l'invention décrite dans ce document de brevet sont pourvus d'au moins un point d'entrée qui identifie un point approprié d'entrée vers le flux et d'au moins un point de sortie qui identifie un point approprié de sortie de ce flux. Ainsi, un flux principal est basculé sur son point de sortie vers le point d'entrée d'un autre flux. De plus, un point de sortie d'un flux vidéo est généralement la fin du dernier paquet transport vidéo du flux. Quant au point d'entrée, il est généralement le commencement du premier paquet transport du flux considéré. Entre un point d'entrée et un point de sortie, un flux est appelé un segment dont la première image est une image fixe et la seconde une image qui ne se réfère pas à une image antérieure au point d'entrée. Par ailleurs, la dernière image d'un segment, dans l'ordre de présentation, ne doit pas être une image B.

On comprendra qu'ainsi, par le choix approprié des points d'entrée et de sortie, un flux principal puisse être basculé vers un segment et que ce basculement se fait sans défaut apparent sur l'image présentée.

Néanmoins, comme cela est mentionné dans le document de brevet cité ci-dessus, les télévisions commerciales peuvent délibérément produire des flux qui ne comportent pas de points de sortie si bien que le basculement à partir de ces flux ne peut pas se faire sans défaut. De plus, l'utilisateur d'un tel système doit avoir la maîtrise de la source du flux vers lequel le basculement est fait de manière à remplir les contraintes évoquées ci-dessus : point d'entrée, première et seconde images, dernière image. Les utilisations mentionnées dans le document de brevet ci-dessus sont toutes mises en oeuvre dans un studio qui a donc la maîtrise du flux vers lequel le basculement est fait. Mais, dans certaines applications, par exemple en tête de station de diffusion hertzienne, cela peut ne pas être le cas car les deux sources sont de ressort des chaînes de production de télévision.

De plus, les fabricants de codeurs MPEG2 sont peu nombreux à avoir prévu des moyens pour mettre en oeuvre ces points d'entrée et de sortie.

Un problème majeur que pose ce type d'application est que les composantes vidéo qui vont basculer de l'une sur l'autre ne sont pas nécessairement synchronisées. Elles présentent alors un déphasage dû à des processus ayant lieu à différents niveaux :
- au niveau vidéo élémentaire : les codeurs vidéo qui ont servi à produire les flux élémentaires ne sont pas synchronisés et les débuts d'images ne coïncident pas nécessairement (un codeur a acquis les images pour compression indépendamment - à des instants indépendants - de l'autre codeur),
- au niveau vidéo élémentaire encore : les scènes vidéo compressées par chacun des codeurs vidéo peuvent avoir des structures différentes (tailles respectives des images, structure des groupes d'images, etc.),
- au niveau des paquets PES : le mode d'empaquetage des images compressées dans les paquets PES peut être différent d'une composante à l'autre,
- au niveau des paquets transport PT : l'avance ou le retard dus à la gigue des paquets transport dans lesquels les paquets PES sont véhiculés.

Dans le cadre de la présente invention, les déphasages de niveau élémentaire sont prioritaires. Au niveau des paquets PES, on se contente de traiter le cas où un paquet PES comporte une et une seule image Par contre, on ne se préoccupe pas de la gigue des paquets du niveau transport.

Etant donné le déphasage des codeurs vidéo, la fin d'une séquence ou d'un groupe d'images GOP du premier programme peut se trouver n'importe où dans la vidéo du second programme, par exemple en cours d'une image quelconque. La prochaine image débutant peut donc être une image bidirectionnelle B ou une image prédite P qui se référe à d'autres images du second programme précédant le point de basculement et qui n'ont pas été transmises, puisqu'à ce moment, c'étaient les images du premier programme qui étaient transmises. Cela se caractérise par un décodage incorrect et des défauts dans les images affichées qui peuvent être de durée plus ou moins longue selon l'importance du déphasage des deux composantes vidéo.

Afin de compenser ce déphasage, une solution simple serait de retarder le second programme, ce qui implique l'utilisation d'une mémoire de stockage pour chaque composante vidéo du second programme de la capacité d'un groupe d'images GOP. Néanmoins, cette solution nécessite le maintien d'un retard perpétuel sur le second programme. Par ailleurs, cette solution est difficilement envisageable au cas où le second programme est embrouillé.

Le but de l'invention est donc de proposer un procédé qui permette de résoudre le problème du déphasage évoqué ci-dessus et par lequel le second programme n'est pas retardé.

A cet effet, un procédé de basculement de la ou des composantes vidéo d'un premier programme audiovisuel numérique sur la ou les composantes vidéo d'un second programme audiovisuel numérique selon l'invention est défini par la revendication 1.

Selon une autre caractéristique de l'invention, il consiste à remplacer les informations présentes dans la composante vidéo du second programme entre le moment où la fin d'une image de la composante vidéo du premier programme a été rencontrée après avoir reçu l'ordre de basculement et le début de la première image du second programme, par des données de bourrage.

Selon une autre caractéristique de l'invention, les références temporelles de chaque image de substitution sont remises à jour.

Selon une autre caractéristique de l'invention, l'information concernant le délai minimum à attendre avant de pouvoir décoder une image (Vbv-Delay) est récupérée de l'image substituée et positionnée dans chaque image de substitution correspondante, à moins qu'elle ne soit égale à 'FFFF dans les autres images de ladite composante dudit second programme, et dans ce cas, elle prend la valeur 'FFFF.

Selon une première variante de mise en oeuvre du procédé de l'invention, les images de substitution forment une suite d'images bidirectionnelles B qui font toutes référence à la dernière image prédite P de la composante vidéo du premier programme, les vecteurs d'estimation de mouvement pour chacune des images bidirectionnelles B de substitution étant déclarés nuls. Lesdites images B de substitution sont par exemple des images entrelacées comprenant une trame inférieure BOTTOM et une trame supérieure TOP qui sont de ce fait analogues à des images de télévision numérique et leurs prédictions sont du type prédiction par trame (field based prediction). Dans ce cas, les trames supérieures (TOP) et les trames inférieures (BOTTOM) desdites images B de substitution font référence à la seule trame inférieure (BOTTOM) de la dernière image prédite P de la composante vidéo du premier programme.

Selon une seconde variante de mise en oeuvre du procédé de l'invention, les images de substitution forment une suite d'images qui est constituée, dans l'ordre de transmission, d'une image prédite suivie d'une ou plusieurs images bidirectionnelles, l'image prédite P de substitution faisant référence à la dernière image prédite P de la composante vidéo du premier programme et chacune des images bidirectionnelles B faisant référence à ladite image prédite P de substitution, les vecteurs d'estimation de mouvement de chacune des images de substitution étant déclarés nuls.

Selon une autre variante de mise en oeuvre du procéedé de la présente invention, les images de substitution forment une suite d'images qui est constituée, dans l'ordre de transmission, d'une alternance d'images prédites et bidirectionnelles, la première image prédite P de substitution faisant référence à la dernière image prédite P ou Intra I de la composante vidéo du premier programme, puis chaque image prédite P de substitution suivante faisant référence à l'image prédite P qui la précède, et chaque image bidirectionnelle B de substitution faisant seulement référence à l'image prédite P qui la précède, le nombre d'images bidirectionelles B entre deux images prédites P étant égal à celui rencontré dans la composante vidéo du premier programme, et les vecteurs d'estimation de mouvement de chacune des images de substitution étant déclarés nuls.

Dans l'un ou l'autre cas précédents, lesdites images de substitution sont des images entrelacées (frame_picture) comportant une trame supérieure TOP et une trame inférieure BOTTOM qui sont de ce fait analogues à des images de télévision numérique et leurs prédictions sont du type prédiction par trame (field based prediction). Alors, les trames supérieure TOP et inférieure BOTTOM de la première image P de substitution prédite font référence à la seule trame inférieure BOTTOM de la dernière image prédite P ou I de la composante vidéo du premier programme, et les trames supérieure TOP et inférieure BOTTOM des images prédites P ou bidirectionnelles B qui suivent faisant référence à la trame inférieure BOTTOM de la première image prédite P de substitution.

Selon une autre variante de mise en oeuvre de la présente invention, les images de substitution forment une suite d'images qui est constituée, dans l'ordre de transmission, d'une première image qui est une image Intra, les autres images étant une alternance d'images bidirectionnelles et prédites, la première image prédite P de substitution faisant référence à l'image Intra, puis chaque image prédite P de substitution suivante faisant référence à l'image prédite P qui la précède, et chaque image bidirectionnelle B de substitution faisant seulement référence à l'image prédite P ou Intra qui la précède, le nombre d'images bidirectionnelle B entre deux images prédites P étant égal à celui rencontré dans la composante vidéo du premier programme, et les vecteurs d'estimation de mouvement de chacune des images de substitution étant déclarés nuls, mis à part l'image Intra qui ne possède pas de vecteur d'estimation de mouvement. Lesdites images de substitution sont des images entrelacées (frame picture) qui peuvent comporter une trame supérieure TOP et une trame inférieure BOTTOM qui sont de ce fait des images analogues à celles de télévision numérique et les prédictions des images bidirectionnelles B et prédites P sont du type prédiction par trame (field based prediction). Les trames supérieures (TOP) et les trames inférieures (BOTTOM) des images P ou B de substitution qui suivent l'image I font alors référence à la trame inférieure BOTTOM de l'image I ou P de substitution qui la précède.

Le procédé de la présente invention peut être mis en oeuvre dans un système de transmission où lesdites images constituant chacune des composantes vidéo du premier et du second programmes sont transportées par des flux de paquets transport, chaque paquet transport (PT) possédant un indicateur PUSI (Payload_Unit_Start_Indicator) qui, lorsqu'il est positionné à un, indique que ledit paquet contient le début d'un paquet PES (PES = Packetised Elementary Stream), les paquets PES étant alignés sur le début de la partie utile des paquets transport PT, chaque paquet PES contenant une et une seule image, système de transmission où certains paquets transport sont destinés à porter des informations de transport tel qu'un indicateur d'accès aléatoire RAI (Random Access Indicator) qui, lorsqu'il est positionné à un, indique que le prochain paquet transport véhiculant cette composante contient les premières données d'une séquence vidéo. Il consiste alors à :
- déterminer le premier paquet de transport PT de la composante vidéo du premier programme présent après la commande de basculement et qui comporte un indicateur d'accès aléatoire RAI positionné à un afin de déterminer le moment de basculement sur le second programme,
- basculer sur ladite composante vidéo du second programme et substituer aux paquets de transport PT de cette composante vidéo des paquets transport de bourrage jusqu'au paquet de transport PT suivant dont l'indicateur PUSI est positionné à un,
- dans ce paquet de transport PT dont l'indicateur PUSI est positionné à un et si l'indicateur RAI n'est pas positionné remplacer l'en-tête de paquet PES situé en début de partie utile par un en-tête de paquet PES reconstruit,
- à partir de ce paquet transport et après l'en-tête de paquet PES, substituer les données de la partie utile de chaque paquet transport de cette composante par les données de l'image de substitution et quand toutes les données de l'image de substitution ont été insérées dans la partie utile des paquets de transport PT de la composante vidéo, substituer les données de la partie utile des paquets de transport PT suivants de la composante par du bourrage vidéo, tel que des octets '00, jusqu'au prochain paquet transport de cette composante vidéo du second programme dont l'indicateur PUSI est positionné à un, ce paquet de transport PT non inclus,
- puis, recommencer l'étape précédente à partir de ce paquet de transport PT avec l'indicateur PUSI positionné à un, jusqu'au prochain paquet de transport PT de la composante vidéo du second programme dont l'indicateur d'accès aléatoire RAI est positionné à un, ce paquet transport non inclus,
- positionner l'indicateur de discontinuité (DI) à un sur ce paquet avec l'indicateur d'accès aléatoire RAI, qui correspond à la fin de la substitution et au début effectif de la vidéo du second programme.

Avantageusement, si les paquets de transport PT sont embrouillés, il consiste à les indiquer en clair en positionnant le champ de contrôle de l'embrouillage transport Transport_Scrambling_Control (TSC) à la valeur binaire 00.

Ledit procédé peut être mis en oeuvre dans un système de transmission où lesdites images constituant chacune des composantes vidéo du premier et du second programmes sont transportées par des flux de paquets transport, chaque paquet transport (PT) possédant un indicateur PUSI (Payload_Unit_Start_Indicator) qui, lorsqu'il est positionné à un, indique que ledit paquet contient le début d'un paquet PES (PES = Packetised Elementary Stream) les paquets PES étant alignés sur le début de la partie utile des paquets transport PT, chaque paquet PES contenant une et une seule image, système de transmission où certains paquets transport sont destinés à porter des informations de transport tel qu'un indicateur d'accès aléatoire RAI (Random Access Indicator) qui, lorsqu'il est positionné à un, indique que le prochain paquet transport véhiculant cette composante contient les premières données d'une séquence vidéo. Il consiste alors à :
- déterminer le premier paquet de transport PT de la composante vidéo du premier programme présent après la commande de basculement et qui comporte un indicateur d'accès aléatoire RAI positionné à un afin de déterminer le moment de basculement sur le second programme,
- basculer sur ladite composante vidéo du second programme et substituer aux paquets de transport PT de cette composante vidéo des paquets transport de bourrage jusqu'au paquet de transport PT suivant dont l'indicateur PUSI est positionné à un,
- si l'indicateur RAI est positionné, à partir de ce paquet transport et après l'en-tête de paquet PES, substituer les données de la partie utile de chaque paquet transport de cette composante par les données de l'image de substitution et quand toutes les données de l'image de substitution ont été insérées dans la partie utile des paquets de transport PT de la composante vidéo, substituer les données de la partie utile des paquets de transport PT suivants de la composante par du bourrage vidéo, tel que des octets '00, jusqu'au prochain paquet transport de cette composante vidéo du second programme dont l'indicateur PUSI est positionné à un, ce paquet de transport PT non inclus,
- puis, recommencer l'étape précédente à partir de ce paquet de transport PT avec l'indicateur PUSI positionné à un, jusqu'au prochain paquet de transport PT de la composante vidéo du second programme dont l'indicateur d'accès aléatoire RAI est positionné à un, ce paquet transport non inclus,
- positionner l'indicateur de discontinuité (DI) à un sur ce paquet avec l'indicateur d'accès aléatoire RAI, qui correspond à la fin de la substitution et au début effectif de la vidéo du second programme.

Dans le cas où l'une ou les deux composantes vidéo ne comporte pas d'indicateur d'accès aléatoire RAI positionné dans le flux transport, il consiste en outre à :
- déterminer le paquet de transport PT de la composante vidéo du ou des flux sans indicateur RAI dont l'indicateur PUSI est positionné à un et dont les données de la partie utile débutent par un en-tête de séquence vidéo,
- effectuer une recherche de l'en-tête de séquence, après la commande de basculement,
- positionner l'indice de discontinuité dans le paquet de transport PT déterminé, si celui-ci comporte un champ d'adaptation (AF) avec une référence horloge programme PCR dans le cas où la composante porte l'horloge du programme,
- ou si le paquet de transport PT déterminé ne comporte pas de champ d'adaptation AF ou s'il s'agit de la composante portant l'horloge du programme et que le champ d'adaptation AF ne comporte pas de référence horloge PCR, remplacer le paquet de transport PT déterminé par un paquet de transport PT spécifique dit paquet de transport inséré, et décaler le paquet de transport PT remplacé, ainsi que les paquets de transport PT suivants de cette composante vidéo dans le flux transport, jusqu'à ce que l'un d'entre eux puisse être inséré dans un paquet de transport PT de bourrage.

Le paquet de transport PT inséré présente avantageusement les caractéristiques suivantes :
- l'indicateur PUSI est positionné à 0,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 10 qui signifie qu'un champ d'adaptation AF est présent dans ce paquet de transport PT, mais pas de partie utile,
- l'indicateur de discontinuité DI situé dans le champ d'adaptation AF est positionné à un,
- si la composante vidéo porte l'horloge du programme, positionner une référence d'horloge programme (PCR) calculée d'après la ou les références horloge PCR précédentes de la même composante dans le champ d'adaptation AF.

Dans le cas où une estampille de présentation (PTS) est présente dans l'en-tête du paquet PES contenant l'en-tête de séquence, il consiste à mettre en oeuvre un pré-traitement de positionnement de l'indicateur RAI, ledit paquet de transport PT inséré pour positionner l'indicateur d'accès aléatoire RAI présentant alors les caractéristiques suivantes :
- l'indicateur PUSI est positionné à 0,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 10 qui signifie qu'un champ d'adaptation AF est présent dans ce paquet de transport PT, mais pas de partie utile,
- l'indicateur RAI situé dans le champ d'adaptation AF est positionné à un,
- l'indicateur de discontinuité DI situé dans le champ d'adaptation AF est positionné,
- si la composante vidéo porte l'horloge du programme, une référence d'horloge programme (PCR) calculée d'après la ou les références horloge PCR précédentes de la même composante est positionnée dans le champ d'adaptation AF.

Dans le cas où l'estampille de présentation n'est pas présente dans l'en-tête du paquet PES contenant l'en-tête de séquence, il consiste à mettre en oeuvre un pré-traitement de positionnement de l'indicateur RAI, et en ce que le paquet de transport PT initial est modifié de manière à ce que son indicateur PUSI est positionné à 0 et que l'en-tête de paquet PES est supprimé de ses données utiles, ledit paquet de transport PT inséré pour positionner l'indicateur RAI présentant alors les caractéristiques suivantes :
- l'indicateur PUSI est positionné à un,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 11, qui signifie qu'un champ d'adaptation AF et une partie utile sont présents dans ce paquet de transport,
- le champ d'adaptation (AF) comporte un indicateur RAI positionné à un,
- l'indicateur de discontinuité est positionné à un sur ce paquet avec indicateur RAI,
- une référence d'horloge programme (PCR) calculée d'après la ou les références horloge PCR précédentes de la même composante est positionnée dans le champ d'adaptation AF si la composante vidéo porte l'horloge du programme,
- une estampille de présentation (PTS) est calculée et positionnée dans la partie utile de ce paquet,
- l'en-tête de paquet PES qui se trouvait dans le paquet de transport PT remplacé est déplacé dans la partie utile de ce paquet de transport PT inséré, et dans le cas où l'estampille de présentation (PTS) n'est pas présente dans l'en-tête du paquet PES, cette estampille PTS est calculée et positionnée dans les données d'en-tête de ce paquet PES.

Les caractéristiques de l'invention mentionnées ci-dessus ainsi que d'autres apparaîtront plus clairement à la lecture de la description suivante de plusieurs modes de réalisation de l'invention, ladite description étant faite en relation avec les dessins joints parmi lesquels :
La Fig. 1 est un vue illustrant un procédé de basculement selon une première mise en oeuvre de l'invention,
la Fig. 2 est un vue illustrant un procédé de basculement selon une seconde mise en oeuvre de l'invention,
la Fig. 3 est un vue illustrant un procédé de basculement selon une troisième mise en oeuvre de l'invention,
la Fig. 4 est un vue illustrant un procédé de basculement selon une quatrième mise en oeuvre de l'invention,
la Fig. 5 est un vue illustrant un procédé de basculement conforme au premier mode de mise en oeuvre de la Fig. 1 dans lequel les images comportent une trame supérieure et une trame inférieure,
la Fig. 6 est un vue illustrant un procédé de basculement conforme au second mode de mise en oeuvre de la Fig. 2 dans lequel les images comportent une trame supérieure et une trame inférieure,
la Fig. 7 est un vue illustrant un procédé de basculement conforme au troisième mode de mise en oeuvre de la Fig. 3 dans lequel les images comportent une trame supérieure et une trame inférieure,
la Fig. 8 est un vue illustrant un procédé de basculement conforme au quatrième mode de mise en oeuvre de la Fig. 4 dans lequel les images comportent une trame supérieure et une trame inférieure,
la Fig. 9 est un vue illustrant un procédé de basculement selon l'invention en se plaçant au niveau transport, et
les Figs. 10a à 10c illustrent les opérations d'insertion d'un paquet transport comportant un indicateur RAI positionné à un.

Dans l'exemple de réalisation maintenant décrit, la structure des groupes d'images GOP des deux flux vidéo considérés qui est généralement caractérisée par un écart entre deux images P (appelé paramètre M dans la norme MPEG-2) et par un écart entre deux images 1 (appelé paramètre N dans la norme MPEG-2) est telle que le paramètre M est égal à 2 signifiant qu'une seule image bidirectionnelle B est placée entre deux prédites images consécutives P. Quant au paramètre N, sa valeur peut être quelconque, le nombre d'images dans un groupe d'images GOP étant sans importance pour l'invention.

On notera que chaque programme peut comporter plusieurs composantes vidéo, par exemple des composantes correspondant à des points de vue distincts du programme (plusieurs caméras par exemple). L'invention s'applique à chacune de ces composantes, mais par souci de simplification, dans la suite de la description, on ne considèrera qu'une unique composante vidéo pour chaque programme.

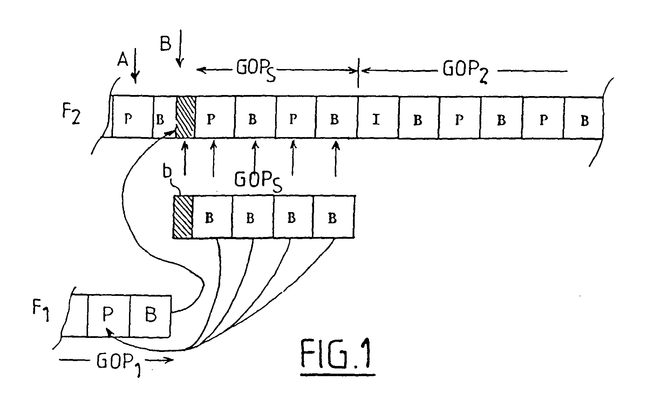

On a représenté à la Fig. 1, un flux élémentaire vidéo F₁ d'un premier programme et un flux élémentaire vidéo F₂ d'un second programme. Chaque flux F₁, F₂ est constitué d'une suite de groupes d'images GOP comportant des images de type Intra I, bidirectionnelles B et prédites P. Ces images sont représentées dans leur ordre de transmission.

On notera qu'à la Fig. 1, on s'est affranchi du niveau des paquets PES et du niveau des paquets transport.

La commande de basculement, représenté par la flèche A, est arrivée en cours du groupe d'images GOP₁. Ce groupe d'images GOP₁ est le dernier groupe d'images de la composante vidéo du premier programme qui est transmis.

Par exemple, selon un mode de réalisation de l'invention, on attend la fin de ce groupe d'images GOP₁ avant d'effectuer le basculement de la composante vidéo du flux F₁ vers la composante vidéo du flux F₂. Ce basculement est indiqué par une flèche B sur la Fig. 1. Sur cette Fig. 1, le groupe d'images GOP₂ est le premier groupe d'images complet de la composante vidéo du second programme qui sera transmis après le basculement.

Selon l'invention, on bascule sur la composante vidéo du second programme au moment défini ci-dessus (flèche B), puis on substitue à chaque image de cette composante une image dont le codage est réalisé indépendamment des données d'image de l'image substituée et des contenus des images auxquelles elle se réfère, et ce jusqu'au commencement du prochain groupe d'images de ladite composante dudit second programme. Ces substitutions se font pour chaque image du groupe incomplet GOP_{S}. Elles sont marquées par des flèches verticales entre les images de substitution et les images substituées.

A la Fig. 1, le basculement sur la composante vidéo du second programme a lieu après la dernière image du groupe d'images de la composante vidéo du premier programme transmise postérieurement à la commande de basculement. Les informations présentes dans la composante vidéo du second programme entre la fin du groupe d'images GOP₁ et le début de la première image sont remplacées par des données de bourrage (notées b sur la Fig. 1). Selon le cas, ces données de bourrage peuvent être celles prévues dans la syntaxe vidéo, dans la syntaxe paquet PES, ou dans la syntaxe transport.

Par exemple, selon un mode de réalisation selon la norme MPEG-2 transport, ce sont des paquets transport de bourrage. Les images de substitution du groupe d'images GOP incomplet du second programme sont notées groupe d'images GOP_{S}. Comme on peut le voir à la Fig. 1, le groupe d'images GOP_{S} est constitué d'une suite d'images bidirectionnelles (B) qui font toutes référence à la dernière image de type P (ou de type I) du dernier groupe d'images GOP₁ du premier programme (des flèches représentent cette référence sur la Fig. 1). Il s'agit de références vers l'avant dans l'ordre de présentation. Par ailleurs, les vecteurs d'estimation de mouvement de chacune des images B de substitution sont déclarés nuls, ce qui permet de figer la dernière image de type P ou I du premier programme.

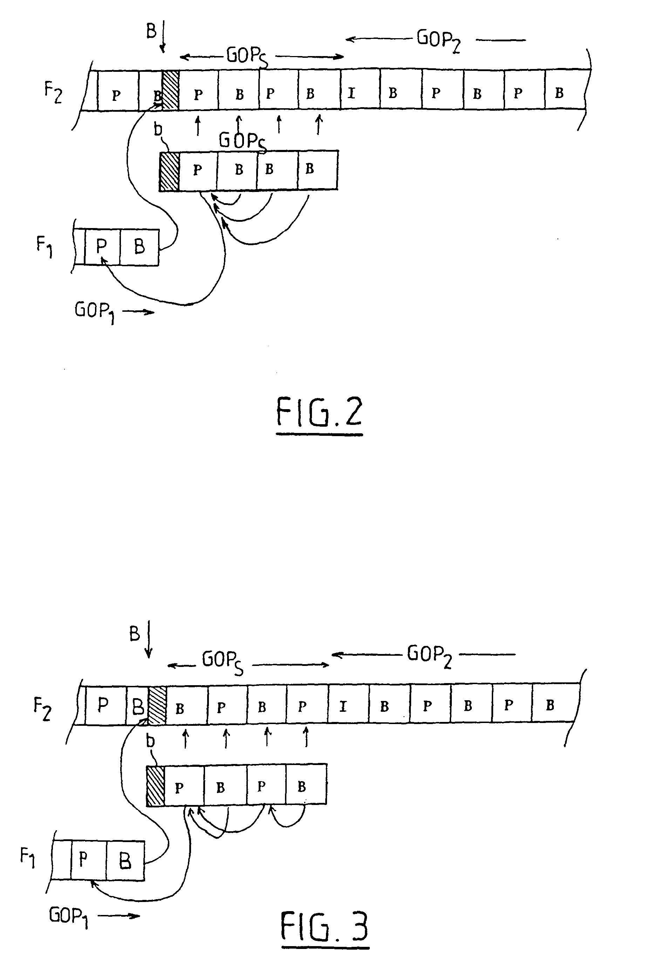

A la Fig. 2, le groupe de substitution GOP_{S} est constitué d'une image P suivie d'une suite d'images B, lesdites images bidirectionnelles B faisant référence à ladite image P. Quant à l'image prédite P du groupe GOP_{S}, elle fait référence à la dernière image de type P (ou de type I) du dernier groupe d'images GOP₁ de la composante vidéo du premier programme (référence en avant dans l'ordre de présentation). Par ailleurs, les vecteurs d'estimation de mouvement de chacune des images prédites P ou bidirectionnelles B de substitution sont déclarés nuls, ce qui permet de figer la dernière image de type P ou I du premier programme.

Dans cette deuxième mise en oeuvre, la présence de l'image P de substitution permet d'éviter un effet désagréable en fin de substitution dans le cas des images entrelacées.

A la Fig. 3, le groupe de substitution GOP_{S} est constitué d'une suite d'images P et B alternant. La première image P de substitution fait référence à la dernière image de type P ou de type I du dernier groupe d'images GOP₁ de la composante vidéo du premier programme. Chaque image P de substitution suivante fait référence à l'image P qui la précède. Chaque image B de substitution fait référence à l'image P qui la précède immédiatement. Chaque image P ou B fait donc une référence vers l'avant dans l'ordre de présentation. Par ailleurs, les vecteurs d'estimation de mouvement de chacune des images P ou B de substitution sont déclarés nuls, ce qui permet de figer la dernière image de type P ou I du premier programme.

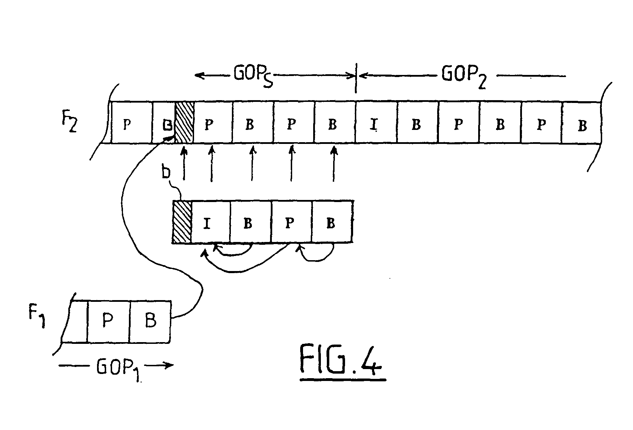

A la Fig. 4, le groupe de substitution GOP_{S} est constitué d'une suite d'images dont la première est une image de type I, la seconde une image de type B, la troisième une image de type P, la quatrième une image de type B, etc. La première image P de substitution fait référence à l'image I de substitution. Chaque image P de substitution suivante fait référence à l'image P de substitution qui la précède. Chaque image B de substitution fait référence à l'image P de substitution qui la précède immédiatement. Chaque image P ou B fait donc une référence vers l'avant dans l'ordre de présentation. Par ailleurs, les vecteurs d'estimation de mouvement de chacune des images P ou B de substitution sont déclarés nuls, ce qui permet de figer l'image de type I de substitution.

Cette quatrième mise en oeuvre est adaptée à l'insertion de spots publicitaires encadrés par des images fixes, par exemple des images de couleur bleue ou des logos.

La présente invention s'applique également dans le cas de systèmes qui supportent les images entrelacées. C'est le cas des systèmes de la norme MPEG-2. Dans ces systèmes, chaque image comporte deux trames, une trame supérieure, dite trame TOP, et une trame inférieure, dite trame BOTTOM. La prédiction des macroblocs de ces deux trames peut être commune (frame based = basée sur la trame) ou séparée (field based = basée sur le champ). Afin d'obtenir un maintien parfait et de ne pas avoir une impression de «retour arrière», la prédiction doit être faite séparément pour chaque trame.

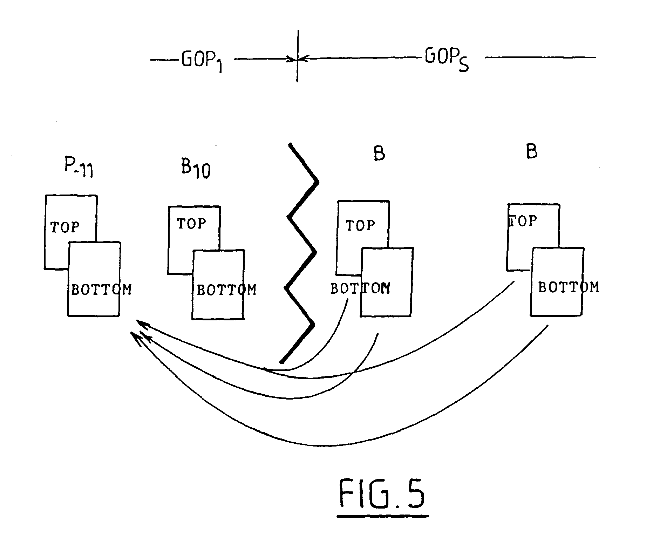

Dans l'exemple de mise en oeuvre de la Fig. 5, correspondant à la mise en oeuvre de la Fig. 1, les trames inférieure et supérieure de chaque image bidirectionnelle (B) de substitution font référence à une seule trame de l'image prédite P du groupe d'image GOP₁ du premier programme. Comme on peut le constater, à la Fig. 5, cette trame est la trame inférieure BOTTOM. On notera cependant qu'il pourrait s'agir de la trame supérieure TOP.

Ainsi, la trame de l'image P du groupe d'image GOP₁ du premier programme est maintenue par les deux trames inférieure BOTTOM et supérieure TOP des images de substitution B du groupe d'images GOP_{S}. Cette mise en oeuvre présente un inconvénient dans le cas d'images entrelacées. En effet, dans l'ordre de présentation, l'image P est affichée après les images B de substitution. Cela a pour effet une impression d'avancée en fin de gel due à l'affichage de la trame inférieure de l'image P du groupe d'images GOP₁ du premier programme. Cela s'avère être peu gênant si la vidéo est peu mobile.

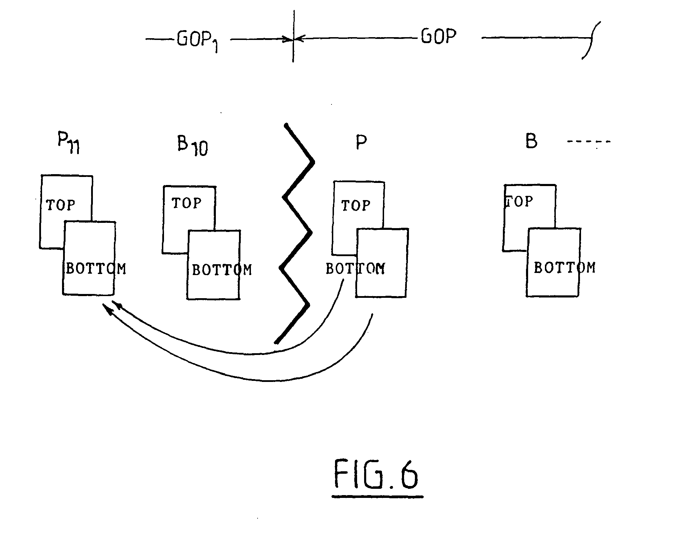

Dans l'exemple de mise en oeuvre de la Fig. 6, correspondant à la mise en oeuvre de la Fig. 2, les deux trames supérieure TOP et inférieure BOTTOM de l'image P de substitution du groupe d'images de substitution GOP_{S} font référence à une seule trame de l'image P du groupe d'image GOP₁ du premier programme. Avantageusement, cette trame est la trame inférieure BOTTOM. Quant à l'image B suivante, ses trames inférieure BOTTOM et supérieure TOP font toutes les deux référence à la trame BOTTOM de l'image P la précédant. Les trames inférieure BOTTOM et supérieure TOP de chaque image B de substitution du groupe d'images GOP_{S} maintiennent la trame inférieure BOTTOM de l'image P de substitution.

Cette mise en oeuvre permet d'obtenir un gel parfait sans aucun défaut visuel avec des images entrelacées. Mais un inconvénient est la difficulté de la mise à jour de la référence temporelle de l'image P de substitution.

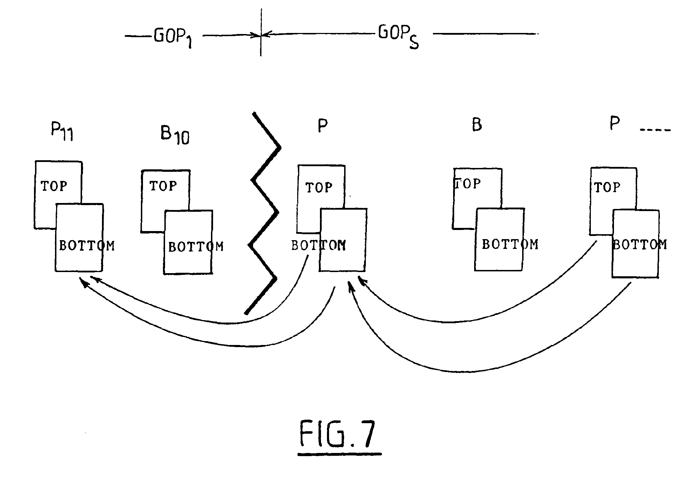

Dans l'exemple de mise en oeuvre de la Fig. 7, correspondant à la mise en oeuvre de la Fig. 3, les deux trames supérieure TOP et inférieure BOTTOM de la première image P de substitution du groupe d'images de substitution GOP_{S} font référence à une seule trame de l'image prédite P du groupe d'image GOP₁ du premier programme. Avantageusement, cette trame est la trame inférieure BOTTOM. Les trames inférieure BOTTOM et supérieure TOP de chaque image P et de chaque image B du groupe d'images de substitution GOP_{S} font référence à la seule trame inférieure BOTTOM de l'image P qui la précède.

Cette mise en oeuvre permet d'obtenir un gel parfait sans aucun défaut visuel avec des images entrelacées, et la mise à jour de la référence temporelle ne pose pas de problème.

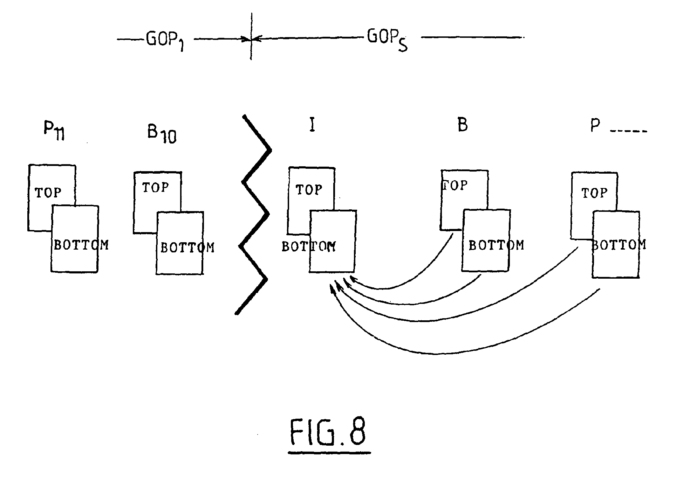

Dans l'exemple de mise en oeuvre de la Fig. 8 correspondant à la mise en oeuvre de la Fig. 4, les trames supérieure TOP et inférieure BOTTOM de chaque image P et de chaque image B du groupe d'images de substitution GOP_{S} font référence à la seule trame inférieure BOTTOM de l'image I ou P qui la précède immédiatement dans l'ordre de transmission.

Cette mise en oeuvre permet d'obtenir un gel parfait sans aucun défaut visuel avec des images entrelacées, et la mise à jour de la référence temporelle ne pose pas de problème.

Les références mentionnées ci-dessus sont effectuées par positionnement des indicateurs concernés dans les macroblocs des images de substitution concernées. Tous les macroblocs des images de substitution sont codés afin d'éviter la référence par défaut des trames sur la trame de même parité (TOP sur TOP et BOTTOM sur BOTTOM) et de dissocier le type de prédiction de chacune d'elles.

Par ailleurs, les motifs des images du groupe d'images de substitution GOP_{S} doivent avoir les mêmes caractéristiques (résolution, soit tailles horizontale et verticale en particulier) que les images qu'elles remplacent. Différents moyens existent pour récupérer l'information de taille : elle peut être extraite du descripteur Target_background_grid s'il est présent dans la table de description du programme PMT (Program Map Table) ; elle peut être extraite directement des informations du flux élémentaire vidéo, etc.

Par ailleurs, la référence temporelle (ordre des images à l'affichage) de chaque image de substitution doit être mise à jour.

Enfin, et pour être conforme à la norme, le délai VbV_Delay qui est le délai minimum à attendre avant de pouvoir décoder une image une fois que le premier octet de l'image est arrivé dans la mémoire tampon du décodeur, est défini de la manière suivante :
- s'il est positionné dans les autres images du groupe d'images GOP₂, il doit être également positionné dans les images du groupe de substitution : il peut être récupéré de l'image remplacée.
- s'il est à 'FFFF dans les autres images du groupe d'images GOP₂ , il doit être également positionné à 'FFFF dans les images du groupe de substitution.

On rappelle que selon la norme MPEG-2, les paquets de flux élémentaires PES, comportent un en-tête h et une charge utile avec les données d'une partie d'image, d'une image ou de plusieurs images (généralement une image) et sont découpées en paquets transport PT. Dans le cas où la charge utile d'un paquet PES contient les données d'une et une seule image, les paquet PES sont alignés et l'indicateur (data_alignement_indicator) correspondant est positionné à un.

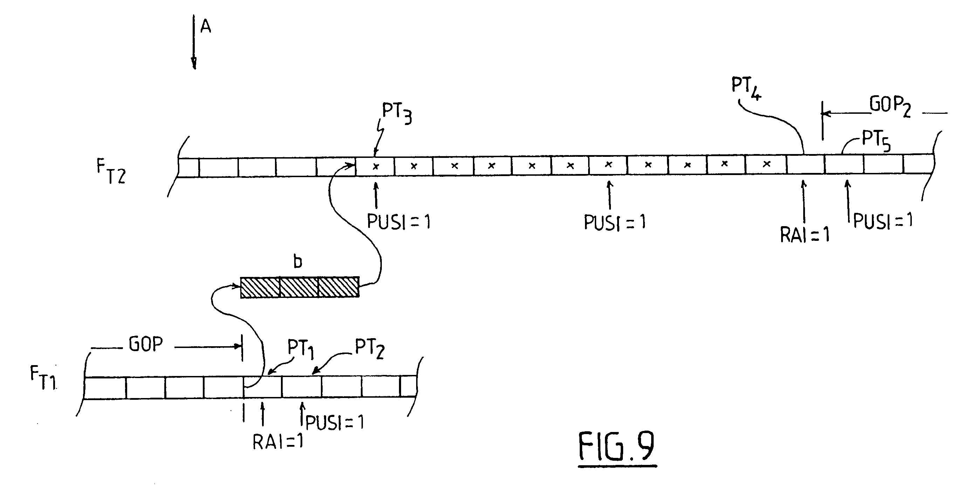

Toujours selon la norme MPEG-2, les paquets transport dont la charge utile débute par l'en-tête h d'un paquet PES ont dans leur propre en-tête H un indicateur spécialisé PUSI (Payload_Unit_Start_Indicator : indicateur de début d'unité de charge utile) positionné à un. Ainsi, les paquets transport dont l'indicateur PUSI est à un contiennent les premières données concernant une image donnée (il en est ainsi des paquets les PT₂, PT₃ et PT₅ à la Fig. 9).

D'autres paquets transport destinés à porter des informations de transport comportent un champ AF dit d'adaptation (adaptation_field). Dans ce champ d'adaptation AF, un indicateur d'accès aléatoire RAI (Random_Access_Indicator) indique, quand il est positionné à un (par exemple comme dans le paquet transport PT₁ ou le paquet PT₄ de la Fig. 9), que le prochain paquet transport dont l'indicateur PUSI est positionné à un (respectivement le paquet transport PT₂ et le paquet PT₅ en l'occurrence), contient non seulement un début de paquet PES, mais aussi un début de séquence vidéo dans le paquet PES.

On notera que le paquet de transport PT dont l'indicateur PUSI est positionné à un peut être celui dont l'indicateur d'accès aléatoire RAI est aussi positionné à un.

Le champ d'adaptation AF contient également un indicateur de discontinuité DI (Discontinuity_Indicator) qui, quand il est positionné à un, indique un état de discontinuité à partir de ce paquet de transport PT : discontinuité du compteur de continuité ou discontinuité de référence horloge PCR si la composante transporte les références horloge PCR.

On dispose donc, dans le cas de l'invention, de deux flux de paquets transport (voir Fig. 9). Le premier flux transport F_{T1} concerne les paquets transport du premier programme, et le second flux transport F_{T2} concerne les paquets transport du second programme.

On notera qu'à la Fig. 9, on n'a représenté que les seuls paquets qui véhiculent la composante vidéo des programmes considérés. Les paquets transport dont l'indicateur de paquet PID est différent qui sont normalement intercalés ont été volontairement omis par souci de clarté.

On notera encore que le basculement d'un programme vidéo vers un autre au niveau transport consiste principalement en le remplacement des paquets de transport PT de la composante vidéo du premier programme par les paquets de transport PT de la composante vidéo du second programme, avec ré-estampillage si nécessaire.

Après l'ordre de basculement (indiqué par la flèche A sur la Fig. 9), on attend la fin de la séquence (du groupe d'images GOP₁) en cours dans le premier programme. Le prochain paquet transport dans le flux transport F_{T1} du premier programme dont l'indicateur d'accès aléatoire RAI est positionné à un (en l'occurrence le paquet PT₁) détermine le moment de basculement sur le second programme.

A partir de ce moment, on remplace les paquets de transport PT de la composante vidéo du premier programme par des paquets de transport PT de bourrage (marqués b sur la Fig. 9) jusqu'à ce qu'un paquet de transport PT du flux transport F_{T2} du second programme ait son indicateur PUSI positionné à un. Lorsqu'un tel paquet indiquant le début d'une image dans le flux F_{T2} se présente (en l'occurrence le paquet PT₃), le processus de substitution peut commencer. Il durera jusqu'à l'apparition, dans le flux second transport F_{T2}, d'un paquet, (en l'occurrence PT₄) dont l'en-tête contient un indicateur RAI positionné à un, indiquant un début de séquence (groupe d'images GOP₂ en l'occurrence).

Le processus de substitution d'une image du flux de transport F_{T2} du second programme par une image de substitution est le suivant :
- dans le paquet de transport PT dont l'indicateur PUSI est positionné à un, on remplace l'en-tête de paquet PES situé en début de la partie utile par un en-tête de paquet PES reconstruit. Les différents champs de cet en-tête prennent, dans un mode de réalisation avantageux, les valeurs suivantes : code de démarrage (start code) = Ox000001, indicateur de flux Stream_ID = celui du premier programme, longueur des paquets PES = 0x0000, 2 octets de drapeau (flag) = 0x8500, longueur des données d'en-tête = 0x00, paquets PES en clair, pas d'estampilles PTS/DTS, ni aucune autre donnée d'en-tête paquet PES,
- à partir de ce paquet transport (après l'en-tête de paquet PES), substituer les données de la partie utile de chaque paquet transport de cette composante par les données de l'image de substitution (image Intra I, image bidirectionnelle B ou ou image prédite P selon le mode de substitution adopté parmi les modes décrits ci-dessus et l'image remplacée). Si les paquets de transport PT sont embrouillés, les indiquer en clair en positionnant le champ de contrôle de l'embrouillage transport Transport_Scrambling_Control (TSC) à la valeur binaire 00. On notera que les messages de contrôle d'accès ECM (Entitlment Control Messages = messages de contrôle des droits) qui contiennent les cryptogrammes des mots de contrôle continuent cependant à être émis,
- quand toutes les données de l'image de substitution ont été insérées dans la partie utile des paquets de transport PT de la composante vidéo, continuer la substitution en remplaçant les données de la partie utile par du bourrage vidéo (c'est-à-dire des octets '00), jusqu'au prochain paquet transport de cette composante vidéo du second programme dont l'indicateur PUSI est positionné à un (ce paquet de transport PT non inclus),
- puis, recommencer les trois étapes précédentes à partir de ce nouveau paquet de transport PT avec l'indicateur PUSI positionné à un, jusqu'au prochain paquet de transport PT de la composante vidéo du second programme dont l'indicateur RAI est positionné à un (non inclus),
- positionner l'indicateur de discontinuité (DI) à un sur ce paquet avec l'indicateur RAI, qui correspond à la fin de la substitution et au début effectif de la vidéo du second programme.

Dans le cas où les indicateurs RAI ne sont pas présents dans l'un ou les deux flux transport, un procédé de l'invention permet de retrouver les en-têtes de séquence dans la partie utile des paquets de transport PT au moment du basculement. Ce procédé consiste à déterminer dans un premier temps le paquet de transport PT de la composante vidéo du (ou des) flux qui ne comporte pas l'indicateur RAI dont l'indicateur PUSI est positionné à un et dont les données de la partie utile débutent par un en-tête de séquence vidéo.

Si la composante vidéo est en clair, la recherche de l'en-tête de séquence ne pose pas de problème : s'il est présent, il se situe immédiatement après l'en-tête de paquet PES. Si la composante vidéo est embrouillée, la recherche de l'en-tête de séquence nécessite la mise en oeuvre d'un système de désembrouillage.

Si le paquet de transport PT ainsi déterminé comporte un champ d'adaptation AF, et avec une référence d'horloge PCR (Program Clock Référence) dans le cas où la composante porte l'horloge du programme, il est possible de simplement positionner l'indice de discontinuité DI dans ce paquet de transport PT.

S'il ne comporte pas de champ d'adaptation AF ou s'il comporte un champ d'adaptation AF mais pas de référence horloge PCR alors qu'il s'agit de la composante portant l'horloge du programme, un paquet de transport PT doit être inséré afin de positionner l'indicateur de discontinuité DI et éventuellement la référence horloge PCR.

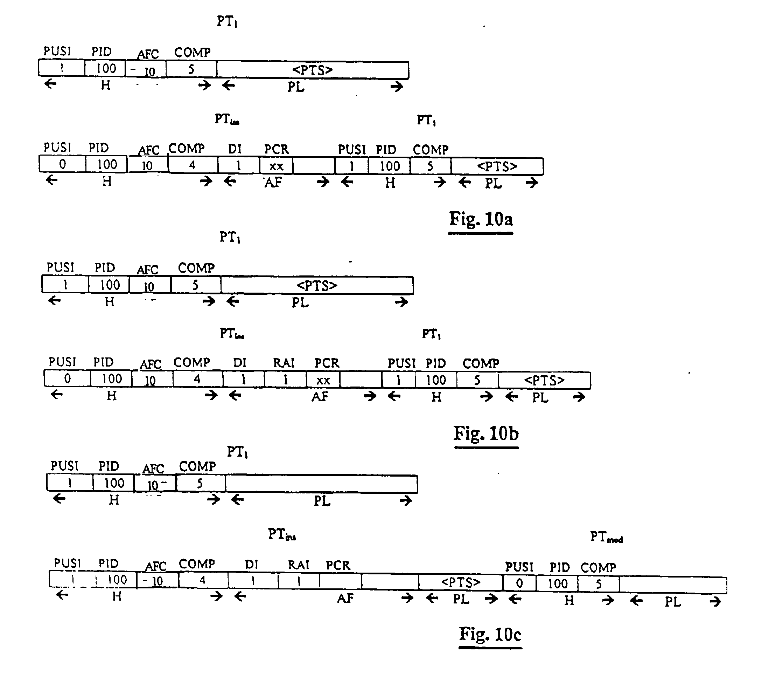

Ce cas est présenté à la Fig. 10a. Sur la ligne supérieure, on peut voir un paquet transport PT₁ dont l'en-tête H a l'indicateur PUSI positionné à un et dont la partie utile PL (payload) contient un en-tête de séquence, ne comporte pas de champ d'adaptation AF Dans cet exemple, l'identificateur de paquet PID est égal 100 et le compteur de continuité COMP est égal à une valeur arbitraire 5.

Le paquet de transport PT inséré PTᵢₙₛ a les caractéristiques suivantes (ligne inférieure de la Fig. 10a) :
- l'indicateur PUSI est positionné à 0 : indique que ce paquet de transport PT ne comporte pas le début d'un paquet PES,
- la valeur du compteur de continuité COMP est positionnée à celle du compteur de continuité du paquet de transport PT initial moins un (en l'occurrence, 5 - 1 = 4),
- le champ de contrôle (AFC) du champ d'adaptation (AF) est positionné à la valeur binaire 10 qui signifie qu'un champ d'adaptation est présent dans ce paquet de transport PT, mais pas de partie utile,
- l'indicateur de discontinuité DI situé dans le champ d'adaptation AF est positionné à un,
- si la composante vidéo porte l'horloge du programme, une référence d'horloge programme (PCR) calculée d'après la ou les références horloge PCR précédentes de la même composante est positionnée dans le champ d'adaptation AF.

Le paquet de transport PT remplacé PT₁ n'est pas supprimé ni modifié. Il est décalé, ainsi que les paquets de transport PT suivants de cette composante vidéo dans le flux transport, jusqu'à ce que l'un d'entre eux puisse être inséré dans un paquet de transport PT de bourrage.

Dans le cas où ces indicateurs RAI ne sont pas présents dans l'un ou les deux flux transport, mais où ils sont utilisés dans la mise en oeuvre du mécanisme de basculement, l'invention prévoit également un pré-traitement permettant de les insérer quelques secondes avant le raccrochage.

Rappelons que, selon la norme MPEG-2 système, l'indicateur RAI est situé dans le champ d'adaptation AF. Positionné à un, il indique que le prochain paquet de transport PT de cette composante qui contient un début de paquet PES (et donc un indicateur PUSI positionné à 1) comporte un en-tête de séquence dans sa charge utile. Par ailleurs, toutes les informations de synchronisation doivent être présentes dans le paquet de transport PT dont l'indicateur RAI est positionné à un, en particulier une référence horloge PCR si la composante porte l'horloge du programme et une estampille de présentation PTS (Presentation Time Stamp) dans l'en-tête de paquet PES.

Dans le cas où une estampille de présentation (PTS) est présente dans l'en-tête du paquet PES contenant l'en-tête de séquence, le paquet de transport PT inséré pour positionner l'indicateur RAI présente les mêmes caractéristiques que précédemment, mais l'indicateur RAI situé dans le champ d'adaptation AF est positionné à un. Le paquet de transport PT remplacé n'est pas modifié, mais il est décalé, ainsi que les paquets de transport PT suivants de cette composante vidéo dans le flux transport, jusqu'à ce que l'un d'entre eux puisse être inséré dans un paquet de transport PT de bourrage.

Ce cas est celui qui est illustré à la Fig. 10b.

Le cas où l'estampille de présentation (PTS) n'est pas présente dans l'en-tête du paquet PES qui contient l'en-tête de séquence est présenté à la Fig. 10c. Le paquet de transport PT inséré pour positionner l'indicateur RAI, PTᵢₙₛ, présente les caractéristiques suivantes :
- l'indicateur PUSI est positionné à un : indique que l'en-tête de paquet PES est situé, dans la partie utile,
- la valeur du compteur de continuité COMP est positionnée à celle du compteur de continuité du paquet de transport PT initial moins un (en l'occurrence, 5 - 1 = 4),
- le champ de contrôle (AFC) du champ d'adaptation (AF) est positionné à la valeur binaire 11, qui signifie qu'un champ d'adaptation et une partie utile sont présents dans ce paquet,
- le champ d'adaptation (AF) comporte un indicateur RAI positionné à un,
- l'indicateur de discontinuité DI est positionné à un,
- si la composante vidéo porte l'horloge du programme, une référence d'horloge programme (PCR) est positionnée dans le champ d'adaptation qui est calculée d'après la ou les références PCR précédentes de la même composante,
- une estampille de présentation (PTS) est calculée et positionnée dans la partie utile de ce paquet,
- l'en-tête de paquet PES qui se trouvait dans le paquet de transport PT remplacé est déplacé dans la partie utile de ce paquet de transport PT inséré, et dans le cas où l'estampille de présentation (PTS) n'est pas présente dans l'en-tête du paquet PES, cette estampille PTS est calculée et positionnée dans les données d'en-tête de ce paquet PES.

Le paquet de transport PT remplacé est donc modifié de façon que son indicateur PUSI soit positionné à un, et il ne comporte pas l'en-tête de paquet PES. Ce paquet de transport PT est décalé, ainsi que les paquets de transport PT suivants de cette composante vidéo dans le flux transport, jusqu'à ce que l'un d'entre eux puisse être inséré dans un paquet de transport PT de bourrage.

On notera que cette dernière solution est difficilement envisageable dans le cas où le second programme est embrouillé, à moins d'adopter des règles d'exploitation précises. En effet , dans le cas où le second programme partagerait les messages ECM (Entitlement Control Messages = messages de commande d'habilitation) liés à l'embrouillage de ses composantes avec d'autres programmes, ces messages ECM devraient recevoir un traitement particulier (par exemple être recréés) pour ne pas avoir à retarder les autres programmes.

## Revendications

1. Procédé de basculement de la ou des composantes vidéo d'un premier programme audiovisuel numérique sur la ou les composantes vidéo d'un second programme audiovisuel numérique, chaque composante vidéo étant constituée, dans l'ordre de présentation, d'une suite ordonnée d'images ou Intra (notées I) ou prédites (notées P) ou bidirectionnelles (notées B), chaque image Intra ne se référant à aucune autre image, chaque image prédite se référant à l'image Intra ou à l'image prédite la précédant, chaque image bidirectionnelle pouvant se référer à deux images non bidirectionnelles, Intra ou P, soit à l'image Intra ou à l'image prédite la précédant soit à l'image Intra ou à l'image P la suivant, soit à une combinaison des deux images Intra ou prédite précédentes et suivantes, **caractérisé en ce qu'**il consiste à basculer sur la composante vidéo du second programme à la fin d'une image de la composante du premier programme transmise après la commande de basculement et à substituer, dans l'ordre de transmission, aux images non Intra de la composante dudit second programme comprise entre le point de basculement et le commencement de la prochaine image Intra de ladite composante dudit second programme, une suite d'au moins deux images, dites images de substitution, Intra, prédites ou bidirectionnelles, dont le codage est réalisé indépendamment des données d'image de l'image substituée et des contenus des images auxquelles ladite image de substitution se réfère, lesdites images de substitution prédites ou bidirectionnelles ayant leur vecteur d'estimation de mouvement qui est déclaré nul, chaque image de substitution prédite ou bidirectionnelle étant du type comportant une trame supérieure TOP et une trame inférieure BOTTOM et ayant leurs prédictions du type prédiction par trame (field based prediction), lesdites images de substitution formant une suite d'images dont la structure est l'une des suivantes :
a) les images de substitution forment une suite d'images bidirectionnelles B, les trames supérieures (TOP) et les trames inférieures (BOTTOM) desdites images de substitution faisant alors référence à une seule trame de la dernière image prédite P de la composante vidéo du premier programme,
b) les images de substitution forment une suite d'images qui est constituée, dans l'ordre de transmission, d'une image prédite P suivie d'une ou plusieurs images bidirectionnelles B, les trames supérieure TOP et inférieure BOTTOM de ladite image P de substitution prédite faisant alors référence à une seule trame de la dernière image prédite P ou Intra de la composante vidéo du premier programme, et les trames supérieure TOP et inférieure BOTTOM des images bidirectionnelles B qui suivent faisant référence à la trame inférieure BOTTOM de ladite image prédite P de substitution,
c) les images de substitution forment une suite d'images qui est constituée, dans l'ordre de transmission, d'une alternance d'images prédites P et bidirectionnelles B, les trames supérieure TOP et inférieure BOTTOM de la première image P de substitution prédite faisant alors référence à une seule trame de la dernière image prédite P ou Intra de la composante vidéo du premier programme, et les trames supérieure TOP et inférieure BOTTOM des images prédites P ou bidirectionnelles B qui suivent faisant alors référence à une trame de la première image prédite P de substitution.
d) les images de substitution forment une suite d'images qui est constituée, dans l'ordre de transmission, d'une première image qui est une image Intra, les autres images étant une alternance d'images bidirectionnelles et prédites, les trames supérieures (TOP) et les trames inférieures (BOTTOM) des images P ou B de substitution qui suivent l'image I faisant alors référence à une seule trame de l'image I ou P de substitution qui la précède.

2. Procédé selon la revendication 1, **caractérisé en ce que** la seule trame à laquelle font référence les trames supérieure TOP et inférieure BOTTOM des images de substitution prédites ou bidirectionnelles est la trame inférieure BOTTOM.

3. Procédé selon la revendication 2, **caractérisé en ce qu'**il consiste à remplacer les informations présentes dans la composante vidéo du second programme entre le moment où la fin d'une image de la composante vidéo du premier programme a été rencontrée après avoir reçu l'ordre de basculement et le début de la première image du second programme, par des données de bourrage.

4. Procédé selon une des revendications précédentes, **caractérisé en ce que** les références temporelles de chaque image de substitution sont remises à jour.

5. Procédé selon une des revendications précédentes, **caractérisé en ce que** l'information concernant le délai minimum à attendre avant de pouvoir décoder une image (Vbv-Delay) est récupérée de l'image substituée et positionnée dans chaque image de substitution correspondante, à moins qu'elle ne soit égale à 'FFFF dans les autres images de ladite composante dudit second programme, et dans ce cas, elle prend la valeur 'FFFF.

6. Procédé selon une des revendications précédentes, ledit procédé étant mis en oeuvre dans un système de transmission où lesdites images constituant chacune des composantes vidéo du premier et du second programmes sont transportées par des flux de paquets transport, chaque paquet transport (PT) possédant un indicateur PUSI (Payload Unit Start_Indicator) qui, lorsqu'il est positionné à un, indique que ledit paquet contient le début d'un paquet PES (PES = Packetised Elementary Stream), les paquets PES étant alignés sur le début de la partie utile des paquets transport PT, chaque paquet PES contenant une et une seule image, système de transmission où certains paquets transport sont destinés à porter des informations de transport tel qu'un indicateur d'accès aléatoire RAI (Random Access Indicator) qui, lorsqu'il est positionné à un, indique que le prochain paquet transport véhiculant cette composante contient les premières données d'une séquence vidéo, **caractérisé en ce qu'**il consiste à:
- déterminer le premier paquet de transport PT de la composante vidéo du premier programme présent après la commande de basculement et qui comporte un indicateur d'accès aléatoire RAI positionné à un afin de déterminer le moment de basculement sur le second programme,
- basculer sur ladite composante vidéo du second programme et substituer aux paquets de transport PT de cette composante vidéo des paquets transport de bourrage jusqu'au paquet de transport PT suivant dont l'indicateur PUSI est positionné à un,
- dans ce paquet de transport PT dont l'indicateur PUSI est positionné à un et si l'indicateur RAI n'est pas positionné remplacer l'en-tête de paquet PES situé en début de partie utile par un en-tête de paquet PES reconstruit,
- à partir de ce paquet transport et après l'en-tête de paquet PES, substituer les données de la partie utile de chaque paquet transport de cette composante par les données de l'image de substitution et quand toutes les données de l'image de substitution ont été insérées dans la partie utile des paquets de transport PT de la composante vidéo, substituer les données de la partie utile des paquets de transport PT suivants de la composante par du bourrage vidéo, tel que des octets '00, jusqu'au prochain paquet transport de cette composante vidéo du second programme dont l'indicateur PUSI est positionné à un, ce paquet de transport PT non inclus,
- puis, recommencer l'étape précédente à partir de ce paquet de transport PT avec l'indicateur PUSI positionné à un, jusqu'au prochain paquet de transport PT de la composante vidéo du second programme dont l'indicateur d'accès aléatoire RAI est positionné à un, ce paquet transport non inclus,
- positionner l'indicateur de discontinuité (DI) à un sur ce paquet avec l'indicateur d'accès aléatoire RAI, qui correspond à la fin de la substitution et au début effectif de la vidéo du second programme.

7. Procédé selon la revendication 6, **caractérisé en ce qu'**il consiste à, si les paquets de transport PT sont embrouillés, les indiquer en clair en positionnant le champ de contrôle de l'embrouillage transport Transport_Scrambling Control (TSC) à la valeur binaire 00.

8. Procédé selon une des revendications 1 à 5, ledit procédé étant mis en oeuvre dans un système de transmission où lesdites images constituant chacune des composantes vidéo du premier et du second programmes sont transportées par des flux de paquets transport, chaque paquet transport (PT) possédant un indicateur PUSI (Payload Unit Start_Indicator) qui, lorsqu'il est positionné à un, indique que ledit paquet contient le début d'un paquet PES (PES = Packetised Elementary Stream), les paquets PES étant alignés sur le début de la partie utile des paquets transport PT, chaque paquet PES contenant une et une seule image, système de transmission où certains paquets transport sont destinés à porter des informations de transport tel qu'un indicateur d'accès aléatoire RAI (Random Access Indicator) qui, lorsqu'il est positionné à un, indique que le prochain paquet transport véhiculant cette composante contient les premières données d'une séquence vidéo, **caractérisé en ce qu'**il consiste à:
- déterminer le premier paquet de transport PT de la composante vidéo du premier programme présent après la commande de basculement et qui comporte un indicateur d'accès aléatoire RAI positionné à un afin de déterminer le moment de basculement sur le second programme,
- basculer sur ladite composante vidéo du second programme et substituer aux paquets de transport PT de cette composante vidéo des paquets transport de bourrage jusqu'au paquet de transport PT suivant dont l'indicateur PUSI est positionné à un,
- si l'indicateur RAI est positionné, à partir de ce paquet transport et après l'entête de paquet PES, substituer les données de la partie utile de chaque paquet transport de cette composante par les données de l'image de substitution et quand toutes les données de l'image de substitution ont été insérées dans la partie utile des paquets de transport PT de la composante vidéo, substituer les données de la partie utile des paquets de transport PT suivants de la composante par du bourrage vidéo, tel que des octets '00, jusqu'au prochain paquet transport de cette composante vidéo du second programme dont l'indicateur PUSI est positionné à un, ce paquet de transport PT non inclus,
- puis, recommencer l'étape précédente à partir de ce paquet de transport PT avec l'indicateur PUSI positionné à un, jusqu'au prochain paquet de transport PT de la composante vidéo du second programme dont l'indicateur d'accès aléatoire RAI est positionné à un, ce paquet transport non inclus,
- positionner l'indicateur de discontinuité (DI) à un sur ce paquet avec l'indicateur d'accès aléatoire RAI, qui correspond à la fin de la substitution et au début effectif de la vidéo du second programme.

9. Procédé selon une des revendications 6, 7 ou 8, dans le cas où l'une ou les deux composantes vidéo ne comporte pas d'indicateur d'accès aléatoire RAI positionné dans le flux transport, **caractérisé en ce qu'**il consiste à :
- déterminer le paquet de transport PT de là composante vidéo du ou des flux sans indicateur RAI dont l'indicateur PUSI est positionné à un et dont les données de la partie utile débutent par un en-tête de séquence vidéo,
- effectuer une recherche de l'en-tête de séquence, après la commande de basculement,
- positionner l'indice de discontinuité dans le paquet de transport PT déterminé, si celui-ci comporte un champ d'adaptation (AF) avec une référence horloge programme PCR dans le cas où la composante porte l'horloge du programme,
- ou si le paquet de transport PT déterminé ne comporte pas de champ d'adaptation AF ou s'il s'agit de la composante portant l'horloge du programme et si le champ d'adaptation AF ne comporte pas de référence horloge PCR, remplacer le paquet de transport PT déterminé par un paquet de transport PT spécifique dit paquet de transport inséré, et décaler le paquet de transport PT remplacé ainsi que les paquets de transport PT suivants de cette composante vidéo dans le flux transport, jusqu'à ce que l'un d'entre eux puisse être inséré dans un paquet de transport PT de bourrage.

10. Procédé selon la revendication 9, **caractérisé en ce que** le paquet de transport PT inséré-présente les caractéristiques suivantes :
- l'indicateur PUSI est positionné à 0,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 10 qui signifie qu'un champ d'adaptation AF est présent dans ce paquet de transport PT, mais pas de partie utile,
- l'indicateur de discontinuité DI situé dans le champ d'adaptation AF est positionné à un,
- si la composante vidéo porte l'horloge du programme, positionner une référence d'horloge programme (PCR) calculée d'après la ou les références horloge PCR précédentes de la même composante dans le champ d'adaptation AF.

11. Procédé selon la revendication 10, dans le cas où une estampille de présentation (PTS) est présente dans l'en-tête du paquet PES contenant l'en-tête de séquence, **caractérisé en ce qu'**il consiste à mettre en oeuvre un pré-traitement de positionnement de l'indicateur RAI, ledit paquet de transport PT inséré pour positionner l'indicateur d'accès aléatoire RAI présentant alors les caractéristiques suivantes :
- l'indicateur PUSI est positionné à 0,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 10 qui signifie qu'un champ d'adaptation AF est présent dans ce paquet de transport PT, mais pas de partie utile,
- l'indicateur RAI situé dans le champ d'adaptation AF est positionné à un,
- l'indicateur de discontinuité DI situé dans le champ d'adaptation AF est positionné,
- si la composante vidéo porte l'horloge du programme, une référence d'horloge programme (PCR) calculée d'après la ou les références horloge PCR précédentes de la même composante est positionnée dans le champ d'adaptation AF.

12. Procédé selon la revendication 10, dans le cas où l'estampille de présentation n'est pas présente dans l'en-tête du paquet PES contenant l'en-tête de séquence, **caractérisé en ce qu'**il consiste à mettre en oeuvre un pré-traitement de positionnement de l'indicateur RAI, et **en ce que** le paquet de transport PT initial est modifié de manière à ce que son indicateur PUSI est positionné à 0 et que l'en-tête de paquet PES est supprimé de ses données utiles, ledit paquet de transport PT inséré pour positionner l'indicateur RAI présentant alors les caractéristiques suivantes :
- l'indicateur PUSI est positionné à un,
- la valeur du compteur de continuité COMP est positionnée à celle du compteur de continuité du paquet de transport PT initial moins un,
- le champ de contrôle (AFC) du champ d'adaptation (AF) est positionné à la valeur binaire 11, qui signifie qu'un champ d'adaptation AF et une partie utile sont présents dans ce paquet de transport,
- le champ d'adaptation (AF) comporte un indicateur RAI positionné à un,
- l'indicateur de discontinuité est positionné à un sur ce paquet avec indicateur RAI,
- une référence d'horloge programme (PCR) calculée d'après la ou les références horloge PCR précédentes de la même composante est positionnée dans le champ d'adaptation AF si la composante vidéo porte l'horloge du programme,
- une estampille de présentation (PTS) est calculée et positionnée dans la partie utile de ce paquet,
- l'en-tête de paquet PES qui se trouvait dans le paquet de transport PT remplacé est déplacé dans la partie utile de ce paquet de transport PT inséré, et dans le cas où l'estampille de présentation (PTS) n'est pas présente dans l'en-tête du paquet PES, cette estampille PTS est calculée et positionnée dans les données d'en-tête de ce paquet PES.

## Claims

1. Method of switching over from the video component(s) of a first digital audiovisual program to the video component(s) of a second digital audiovisual program, each video component comprising, in order of presentation, an ordered series of images, of intra (denoted I) or predicted (denoted P) or bidirectional (denoted B) type, each intra image not referring to any other image, each predicted image referring to the intra image or the predicted image that precedes it, each bidirectional image possibly referring to two non-bidirectional, intra or P images, to either the intra image or the predicted image that precedes it or to the intra image or the P image that follows it, or to a combination of the two preceding and following intra or predicted images, **characterized in that** it consists in switching over to the video component of the second program at the end of an image of the component of the first program transmitted after the switchover command, and in replacing, in order of transmission, the non-intra images of the component of said second program included between the switchover point and the commencement of the next intra image of said component of said second program with a series of at least two images, called intra, predicted or bidirectional substitution images, the encoding of which is performed independently of the image data of the substituted image and of the contents of the images to which said substitution image refers, said predicted or bidirectional substitution images having their motion estimation vector which is declared zero, each predicted or bidirectional substitution image being of the type comprising a TOP field and a BOTTOM field and having their predictions of the field-based prediction type, said substitution images forming a series of images, the structure of which is one of the following:
a) the substitution images form a series of bidirectional images B, the TOP fields and the BOTTOM fields of said substitution images then referring to a single field of the last predicted image P of the video component of the first program,
b) the substitution images form a series of images which comprises, in order of transmission, a predicted image P followed by one or more bidirectional images B, the TOP and BOTTOM fields of said predicted substitution image P then referring to a single field of the last predicted P or intra image of the video component of the first program, and the TOP and BOTTOM fields of the bidirectional images B which follow referring to the BOTTOM field of said substitution predicted image P,
c) the substitution images form a series of images which comprises, in order of transmission, an alternating sequence of predicted P and bidirectional B images, the TOP and BOTTOM fields of the first predicted substitution image P then referring to a single field of the last predicted P or intra image of the video component of the first program, and the TOP and BOTTOM fields of the predicted P or bidirectional B images that follow then referring to a field of the first substitution predicted image P,
d) the substitution images form a series of images which comprises, in order of transmission, a first image which is an intra image, the other images being an alternating sequence of bidirectional and predicted images, the TOP and BOTTOM fields of the substitution P or B images that follow the I image then referring to a single field of the substitution I or P image that precedes it.

2. Method according to Claim 1, **characterized in that** the only field to which the TOP and BOTTOM fields of the predicted or bidirectional substitution images refer is the BOTTOM field.

3. Method according to Claim 2, **characterized in that** it consists in replacing the information present in the video component of the second program between the moment when the end of an image of the video component of the first program has been encountered after having received the switchover command and the start of the first image of the second program, with padding data.

4. Method according to one of the preceding claims, **characterized in that** the time references of each substitution image are updated.

5. Method according to one of the preceding claims, **characterized in that** the information concerning the minimum delay to wait before being able to decode an image (Vbv-Delay) is recovered from the image substituted and positioned in each corresponding substitution image, unless it is equal to 'FFFF in the other images of said component of said second program, and in this case, it takes the value 'FFFF.

6. Method according to one of the preceding claims, said method being implemented in a transmission system where said images forming each of the video components of the first and second programs are transported by transport packet streams, each transport packet (PT) having an indicator PUSI (Payload Unit Start_Indicator) which, when it is set to one, indicates that said packet contains the start of a PES (Packetized Elementary Stream) packet, the PES packets being aligned on the start of the payload part of the transport packets PT, each PES packet containing one and only one image, transmission system in which certain transport packets are intended to carry transport information such as a random access indicator RAI which, when it is set to one, indicates that the next transport packet conveying this component contains the initial data of a video sequence, **characterized in that** it consists in:
- determining the first transport packet PT of the video component of the first program present after the switchover command and which includes a random access indicator RAI set to one in order to determine the moment of switchover to the second program,
- switching over to said video component of the second program and replacing the transport packets PT of this video component with padding transport packets until the next transport packet PT whose indicator PUSI is set to one,
- in this transport packet PT whose indicator PUSI is set to one, and if the indicator RAI is not set, replacing the PES packet header situated at the start of the payload part with a reconstructed PES packet header,
- from this transport packet and after the PES packet header, replacing the data of the payload part of each transport packet of this component with the data of the substitution image and, when all the data of the substitution image has been inserted into the payload part of the transport packet PT of the video component, replacing the data of the payload part of the following transport packets PT of the component with video padding, such as '00 octets, until the next transport packet of this video component of the second program whose indicator PUSI is set to one, not including this transport packet PT,
- then, recommencing the preceding step from this transport packet PT with the indicator PUSI set to one, until the next transport packet PT of the video component of the second program whose random access indicator (RAI) is set to one, not including this transport packet,
- setting the discontinuity indicator (DI) to one on this packet with the random access indicator RAI, which corresponds to the end of the substitution and to the effective start of the video of the second program.

7. Method according to Claim 6, **characterized in that** it consists, if the transport packets PT are scrambled, in indicating them in clear by setting the transport scrambling control (TSC) field to the binary value 00.

8. Method according to one of Claims 1 to 5, said method being implemented in a transmission system where said images forming each of the video components of the first and the second programs are transported by transport packet streams, each transport packet (PT) having a payload unit start indicator PUSI which, when it is set to one, indicates that said packet contains the start of a PES (Packetized Elementary Stream) packet, the PES packets being aligned on the start of the payload part of the transport packets PT, each PES packet containing one and only one image, transmission system in which certain transport packets are intended to carry transporting information such as a random access indicator RAI which, when it is set to one, indicates that the next transport packet conveying this component contains the initial data of a video sequence, **characterized in that** it consists in:
- determining the first transport packet PT of the video component of the first program present after the switchover command and which includes a random access indicator RAI set to one in order to determine the moment of switchover to the second program,
- switching over to said video component of the second program and replacing the transport packets PT of this video component with padding transport packets until the next transport packet PT whose indicator PUSI is set to one,
- if the indicator RAI is set, from this transport packet and after the PES packet header, replacing the data of the payload part of each transport packet of this component with the data of the substitution image and, when all the data of the substitution image has been inserted into the payload part of the transport packets PT of the video component, replacing the data of the payload part of the following transport packets PT of the component with video padding, such as '00 octets, until the next transport packet of this video component of the second program whose indicator PUSI is set to one, not including this transport packet PT,
- then, recommencing the preceding step from this transport packet PT with the indicator PUSI set to one, until the next transport packet PT of the video component of the second program whose random access indicator RAI is set to one, not including this transport packet,
- setting the discontinuity indicator (DI) to one on this packet with the random access indicator RAI, which corresponds to the end of the substitution and to the effective start of the video of the second program.

9. Method according to one of Claims 6, 7 or 8, in the case where one or two video components do not include a random access indicator RAI set in the transport stream, **characterized in that** it consists in:
- determining the transport packet PT of the video component of the stream(s) without indicator RAI whose indicator PUSI is set to one and of which the data of the payload part begins with a video sequence header,
- performing a search for the sequence header, after the switchover command,
- setting the discontinuity index in the determined transport packet PT, if the latter includes an adaptation field (AF) with a program clock reference PCR in the case where the component carries the clock of the program,
- or if the determined transport packet PT does not include an adaptation field AF or if it is the component carrying the program clock, and if the adaptation field AF does not include a clock reference PCR, replacing the determined transport packet PT with a specific transport packet PT, called inserted transport packet, and shifting the replaced transport packet PT and the following transport packets PT of this video component in the transport stream, until one of them can be inserted into a padding transport packet PT.

10. Method according to Claim 9, **characterized in that** the inserted transport packet PT has the following characteristics:
- the indicator PUSI is set to zero,
- the value of the discontinuity counter COMP is set to that of the continuity counter of the initial transport packet PT minus one,
- the control field (AFC) of the adaptation field (AF) is set to the binary value 10 which signifies that an adaptation field AF is present in this transport packet PT, but no payload part,
- the discontinuity indicator DI situated in the adaptation field AF is set to one,
- if the video component carries the program clock, setting a program clock reference (PCR) calculated according to the preceding clock reference(s) PCR of the same component in the adaptation field AF.

11. Method according to Claim 10, in the case where a presentation time stamp (PTS) is present in the PES packet header containing the sequence header, **characterized in that** it consists in implementing a preliminary processing operation for setting the indicator RAI, said transport packet PT inserted to set the random access indicator RAI then presenting the following characteristics:
- the indicator PUSI is set to zero,
- the value of the continuity counter COMP is set to that of the continuity counter of the initial transport packet PT minus one,
- the control field (AFC) of the adaptation field (AF) is set to the binary value 10 which signifies that an adaptation field AF is present in this transport packet PT, but no payload part,
- the indicator RAI situated in the adaptation field AF is set to one,
- the discontinuity indicator DI situated in the adaptation field AF is set,
- if the video component carries the program clock, a program clock reference (PCR) calculated according to the preceding clock reference(s) PCR of the same component is set in the adaptation field AF.

12. Method according to Claim 10, in the case where the presentation time stamp is not present in the header of the PES packet containing the sequence header, **characterized in that** it consists in implementing a preliminary processing operation for setting the indicator RAI, and **in that** the initial transport packet PT is modified so that its indicator PUSI is set to zero and the PES packet header is deleted from its useful data, said transport packet PT inserted to set the indicator RAI then presenting the following characteristics:
- the indicator PUSI is set to one,
- the value of the continuity counter COMP is set to that of the continuity counter of the initial transport packet PT minus one,
- the control field (AFC) of the adaptation field (AF) is set to the binary value 11, which signifies that an adaptation field AF and a payload part are present in this transport packet,
- the adaptation field (AF) includes an indicator RAI set to one,
- the discontinuity indicator is set to one on this packet with indicator RAI,
- a program clock reference (PCR) calculated according to the preceding clock reference(s) PCR of the same component is set in the adaptation field AF if the video component carries the program clock,
- a presentation time stamp (PTS) is calculated and set in the payload part of this packet,
- the PES packet header that was in the replaced transport packet PT is shifted in the payload part of this inserted transport packet PT, and in the case where the presentation time stamp (PTS) is not present in the PES packet header, this time stamp PTS is calculated and set in the header data of this PES packet.

## Patentansprüche

1. Verfahren zum Umschalten der Videokomponente(n) eines ersten digitalen audiovisuellen Programms auf die Videokomponente(n) eines zweiten digitalen audiovisuellen Programms, wobei jede Videokomponente in der Reihenfolge der Darstellung aus einer geordneten Folge von entweder Intra-(mit I bezeichneten) oder prädiktiven (mit P bezeichneten) oder bidirektionalen (mit B bezeichneten) Bildern besteht, wobei jedes Intra-Bild sich auf kein anderes Bild bezieht, jedes prädiktive Bild sich auf das vorhergehende Intra- oder prädiktive Bild bezieht, jedes bidirektionale Bild sich auf zwei, nicht bidirektionale, Intra- oder P-Bilder beziehen kann, entweder auf das vorhergehende Intra-Bild oder auf das prädiktive Bild oder aber auf das nachfolgende Intra-Bild oder das P-Bild oder aber auf eine Kombination der beiden vorhergehenden und nachfolgenden Intra- oder prädiktiven Bildern, **dadurch gekennzeichnet, dass** es darin besteht, am Ende eines Bildes der Komponente des ersten Programms, welches nach dem Umschaltbefehl übertragen wird, auf die Videokomponente des zweiten Programms umzuschalten und in der Reihenfolge der Übertragung die Nicht-Intra-Bilder der Komponente des zweiten Programms, die sich zwischen dem Schaltpunkt und dem Beginn des nachfolgenden Intra-Bildes der Komponente des zweiten Programms befindet, durch eine Folge von mindestens zwei Bildern, sogenannten Intra-, prädiktiven oder bidirektionalen Ersatzbildern, zu ersetzen, deren Kodierung unabhängig von den Bilddaten des ersetzten Bildes und den Inhalten der Bilder, auf die sich das Ersatzbild bezieht, erfolgt, wobei die prädiktiven oder bidirektionalen Ersatzbilder ihren Vektor der Bewegungsschätzung aufweisen, der für ungültig erklärt wird, wobei jedes prädiktive oder bidirektionale Ersatzbild von einer Art ist, die ein oberes Feld TOP und ein unteres Feld BOTTOM aufweist, und deren Vorhersagen von der Art her feldbasierte Vorhersagen (field based prediction) sind, wobei die Ersatzbilder eine Bildfolge bilden, deren Struktur eine der Folgenden ist:
a) die Ersatzbilder bilden eine Folge von bidirektionalen B-Bildern, wobei die oberen Felder (TOP) und die unteren Felder (BOTTOM) der Ersatzbilder sich dann auf ein einziges Feld des letzten prädiktiven P-Bildes der Videokomponente des ersten Programms beziehen,
b) die Ersatzbilder bilden eine Bildfolge, die in der Reihenfolge der Übertragung aus einem prädiktiven P-Bild gebildet ist, gefolgt von einem oder mehreren bidirektionalen B-Bildern, wobei das obere TOP-Feld und das untere BOTTOM-Feld des prädiktiven Ersatz-P-Bildes sich dann auf ein einziges Feld des letzten prädiktiven P- oder Intra-Bildes der Videokomponente des ersten Programms beziehen und das obere TOP-Feld und das untere BOTTOM-Feld der nachfolgenden bidirektionalen B-Bilder sich auf das untere BOTTOM-Feld des prädiktiven P-Ersatzbildes beziehen,
c) die Ersatzbilder bilden eine Bildfolge, die in der Reihenfolge der Übertragung abwechselnd aus prädiktiven P-Bildern und bidirektionalen B-Bildern gebildet ist, wobei das obere TOP-Feld und das untere BOTTOM-Feld des ersten prädiktiven P-Ersatzbildes sich dann auf ein einziges Feld des letzten prädiktiven P- oder Intra-Bildes der Videokomponente des ersten Programms beziehen und das obere TOP-Feld und das untere BOTTOM-Feld der nachfolgenden prädiktiven P- oder bidirektionalen B-Bilder sich dann auf ein Feld des ersten prädiktiven P-Ersatzbildes beziehen.
d) die Ersatzbilder bilden eine Bildfolge, die in der Reihenfolge der Übertragung aus einem ersten Bild besteht, das ein Intra-Bild ist, wobei die anderen Bilder abwechselnd bidirektionale und prädiktive Bilder sind, wobei die oberen Felder (TOP) und die unteren Felder (BOTTOM) der P- oder B-Ersatzbilder, die auf das I-Bild folgen, sich dann auf ein einziges Feld des vorhergehenden I-oder P-Ersatzbildes beziehen.

2. Verfahren nach Anspruch 1, **dadurch gekennzeichnet, dass** das einzige Feld, auf das sich das obere TOP-Feld und das untere BOTTOM-Feld der prädiktiven oder bidirektionalen Ersatzbilder beziehen, das untere BOTTOM-Feld ist.

3. Verfahren nach Anspruch 2, **dadurch gekennzeichnet**, das es darin besteht, die Informationen, die in der Videokomponente des zweiten Programms zwischen dem Augenblick, in dem das Ende eines Bildes der Videokomponente des ersten Programms gefunden wurde, nachdem der Umschaltbefehl empfangen wurde, und dem Beginn des ersten Bildes des zweiten Programms vorhanden sind, durch Fülldaten zu ersetzen.

4. Verfahren nach einem der vorhergehenden Ansprüche, **dadurch gekennzeichnet, dass** die zeitlichen Bezüge jedes Ersatzbildes aktualisiert werden.

5. Verfahren nach einem der vorhergehenden Ansprüche, **dadurch gekennzeichnet, dass** die Information betreffend die Mindestwartefrist, bis ein Bild dekodiert werden kann (Vbv-Delay), aus dem ersetzten Bild wiedergewonnen wird und in jedem entsprechenden Ersatzbild eingestellt wird, sofern sie nicht gleich 'FFFF in den anderen Bildern der Komponente des zweiten Programms ist, und in diesem Fall nimmt sie den Wert 'FFFF an.

6. Verfahren nach einem der vorhergehenden Ansprüche, wobei das Verfahren in einem Übertragungssystem eingesetzt wird, in dem die Bilder, die jeweils Videokomponenten des ersten und des zweiten Programms bilden, über Ströme von Transportpaketen transportiert werden, wobei jedes Transportpaket (PT) einen PUSI-Indikator (PUSI = Payload Unit Start_Indicator) besitzt, der, wenn er auf eins eingestellt ist, angibt, dass das Paket den Anfang eines PES-Pakets (PES = Packetised Elementary Stream) enthält, wobei die PES-Pakete auf den Anfang des verwendbaren Teils der Transportpakete PT ausgerichtet sind, wobei jedes PES-Paket ein und nur ein einziges Bild enthält, Übertragungssystem, bei dem bestimmte Transportpakete dazu bestimmt sind, Transportinformationen zu tragen, wie zum Beispiel einen Direktzugriffsindikator RAI (Random Access Indicator), der, wenn er auf eins eingestellt ist, angibt, dass das nächste Transportpaket, das diese Komponente befördert, die ersten Daten einer Videosequenz enthält, **dadurch gekennzeichnet, dass** es darin besteht,
- das erste Transportpaket PT der Videokomponente des ersten Programms festzulegen, das nach dem Umschaltbefehl vorhanden ist und das einen Direktzugriffsindikator RAI aufweist, der auf eins eingestellt ist, um den Augenblick des Umschaltens auf das zweite Programm festzulegen,
- auf die Videokomponente des zweiten Programms umzuschalten und die Transportpakete PT dieser Videokomponente bis zum nachfolgenden Transportpaket PT, dessen PUSI-Indikator auf eins eingestellt ist, durch Transportfüllpakete zu ersetzen,
- in diesem Transportpaket PT, dessen PUSI-Indikator auf eins eingestellt ist, und wenn der RAI-Indikator nicht eingestellt ist, den Header des PES-Pakets, der sich am Anfang des verwendbaren Teils befindet, durch einen wiederhergestellten Header des PES-Pakets zu ersetzen,
- von diesem Transportpaket aus und nach dem Header des PES-Pakets die Daten des verwendbaren Teils jedes Transportpakets dieser Komponente durch die Daten des Ersatzbildes zu ersetzen, und wenn alle Daten des Ersatzbildes in dem verwendbaren Teil der Transportpakete PT der Videokomponente eingefügt worden sind, die Daten des verwendbaren Teils der nachfolgenden Transportpakete PT der Komponente durch Videofülldaten, wie zum Beispiel '00-Bytes, bis zum nächsten Transportpaket dieser Videokomponente des zweiten Programms, dessen PUSI-Indikator auf eins eingestellt ist, zu ersetzen, wobei dieses Transportpaket PT nicht eingeschlossen ist,
- dann den vorhergehenden Schritt von diesem Transportpaket PT aus mit dem auf eins eingestellten PUSI-Indikator bis zum nächsten Transportpaket PT der Videokomponente des zweiten Programms, dessen Direktzugriffsindikator RAI auf eins eingestellt ist, erneut beginnen, wobei dieses Transportpaket nicht eingeschlossen ist,
- den Diskontinuitätsindikator (DI) auf diesem Paket auf eins zu setzen mit dem Direktzugriffsindikator RAI, der dem Ende der Ersetzung und dem tatsächlichen Beginn des Videos des zweiten Programms entspricht.

7. Verfahren nach Anspruch 6, **dadurch gekennzeichnet, dass** es, falls die Transportpakete PT vermischt sind, darin besteht, sie klar anzuzeigen, indem das Transport Scrambling Control (TSC)-Feld auf den Binärwert 00 eingestellt wird.

8. Verfahren nach einem der Ansprüche 1 bis 5, wobei das Verfahren in einem Übertragungssystem eingesetzt wird, in dem die Bilder, die jeweils Videokomponenten des ersten und des zweiten Programms bilden, über Transportpaketströme befördert werden, wobei jedes Transportpaket (PT) einen PUSI-Indikator (PUSI = Payload Unit Start_Indicator) besitzt, welcher, wenn er auf eins eingestellt ist, angibt, dass das Paket den Beginn eines PES-Pakets (PES = Packetised Elementary Stream) enthält, wobei die PES-Pakete auf den Beginn des verwendbaren Teils der Transportpakete PT ausgerichtet sind, wobei jedes PES-Paket ein und nur ein Bild enthält, Übertragungssystem, in dem bestimmte Transportpakete dazu bestimmt sind, Transportinformationen zu tragen, wie zum Beispiel einen Direktzugriffsindikator RAI (Random Access Indicator), der, wenn er auf eins eingestellt ist, angibt, dass das nächste Transportpaket, dass diese Komponente befördert, die ersten Daten einer Videosequenz enthält, **dadurch gekennzeichnet, dass** es darin besteht:
- das erste Transportpaket PT der Videokomponente des ersten Programms festzulegen, das nach dem Umschaltbefehl vorhanden ist und das einen Direktzugriffsindikator RAI aufweist, der auf eins eingestellt ist, um den Augenblick des Umschaltens auf das zweite Programm festzulegen,
- auf die Videokomponente des zweiten Programms umzuschalten und die Transportpakete PT dieser Videokomponente bis zum nachfolgenden Transportpaket PT, dessen PUSI-Indikator auf eins eingestellt ist, durch Transportfüllpakete zu ersetzen,
- wenn der RAI-Indikator eingestellt ist, von diesem Transportpaket aus und nach dem Header des PES-Pakets die Daten des verwendbaren Teils jedes Transportpakets dieser Komponente durch Daten des Ersatzbildes zu ersetzen, und wenn alle Daten des Ersatzbildes in dem verwendbaren Teil der Transportpakete PT der Videokomponente eingefügt worden sind, die Daten des verwendbaren Teils der nachfolgenden Transportpakete PT der Komponente durch Videofülldaten, wie zum Beispiel '00-Bytes, bis zum nächsten Transportpaket dieser Videokomponente des zweiten Programms, dessen PUSI-Indikator auf eins eingestellt ist, zu ersetzen, wobei dieses Transportpaket PT nicht eingeschlossen ist,
- dann den vorhergehenden Schritt von diesem Transportpaket PT aus mit dem auf eins eingestellten PUSI-Indikator bis zum nächsten Transportpaket PT der Videokomponente des zweiten Programms, dessen Direktzugriffsindikator RAI auf eins eingestellt ist, erneut beginnen, wobei dieses Transportpaket nicht eingeschlossen ist,
- den Diskontinuitätsindikator (DI) auf eins zu setzen auf diesem Paket mit dem Direktzugriffsindikator RAI, der dem Ende der Ersetzung und dem tatsächlichen Beginn des Videos des zweiten Programms entspricht.

9. Verfahren nach einem der Ansprüche 6, 7 oder 8, in dem Fall, dass eine oder beide Videokomponenten keinen Direktzugriffsindikator RAI, der in dem Transportstrom angeordnet ist, aufweisen, **dadurch gekennzeichnet, dass** es darin besteht:
- das Transportpaket PT der Videokomponente des Stroms oder der Ströme ohne RAI-Indikator festzulegen, deren PUSI-Indikator auf eins eingestellt ist und deren Daten des verwendbaren Teils mit einem Videosequenzheader beginnen,
- eine Durchsuchung des Sequenzheaders nach dem Umschaltbefehl durchzuführen,
- den Diskontinuitätsindex in dem festgelegten Transportpaket PT anzuordnen, falls dieses ein Anpassungsfeld (AF = adaptation field) mit einer Referenzzeitangabe PCR (program clock reference) in dem Fall aufweist, dass die Komponente den Zeitgeber des Programms trägt,
- oder, falls das festgelegte Transportpaket PT kein Anpassungsfeld AF aufweist oder falls es sich um die Komponente handelt, die den Zeitgeber des Programms trägt und falls das Anpassungsfeld AF keine Referenzzeitangabe PCR aufweist, das festgelegte Transportpaket PT durch ein spezifisches Transportpaket PT, das sogenannte eingefügte Transportpaket, zu ersetzen, und das ersetzte Transportpaket PT sowie die nachfolgenden Transportpakete PT dieser Videokomponente in dem Transportstrom zu verschieben, bis eines von ihnen in einem Fülltransportpaket PT eingefügt werden kann.

10. Verfahren nach Anspruch 9, **dadurch gekennzeichnet, dass** das eingefügte Transportpaket PT folgende Merkmale aufweist:
- der PUSI-Indikator ist auf 0 eingestellt,
- der Wert des Kontinuitätszählers COMP ist auf den Wert des Kontinuitätszählers des anfänglichen Transportpakets PT minus eins eingestellt,
- das Kontrollfeld (AFC) des Anpassungsfeldes (AF) ist auf den Binärwert 10 eingestellt, der bedeutet, dass ein Anpassungsfeld AF in diesem Transportpaket PT vorhanden ist, aber kein verwendbarer Teil,
- der Diskontinuitätsindikator DI, der sich in dem Anpassungsfeld AF befindet, ist auf eins eingestellt,
- wenn die Videokomponente den Zeitgeber des Programms trägt, eine Referenzzeitangabe (PCR), die gemäß der oder den vorhergehenden Referenzzeitangaben PCR derselben Komponente berechnet wurde, in dem Anpassungsfeld AF anzuordnen.

11. Verfahren nach Anspruch 10, in dem Fall, dass ein Präsentationszeitstempel (PTS = presentation time stamp) in dem Header des PES-Pakets vorhanden ist, der den Sequenzheader enthält, **dadurch gekennzeichnet, dass** es darin besteht, eine Vorbehandlung der Einstellung des RAI-Indikators durchzuführen, wobei das Transportpaket PT, das eingefügt ist, um den Direktzugriffsindikator RAI einzustellen, dann folgende Merkmale aufweist:
- der PUSI-Indikator ist auf 0 eingestellt,
- der Wert des Kontinuitätszählers COMP ist auf den Wert des Kontinuitätszählers des anfänglichen Transportpakets PT minus eins eingestellt,
- das Kontrollfeld (AFC) des Anpassungsfeldes (AF) ist auf den Binärwert 10 eingestellt, der bedeutet, dass ein Anpassungsfeld AF in diesem Transportpaket PT vorhanden ist, aber kein verwendbarer Teil,
- der RAI-Indikator, der sich in dem Anpassungsfeld AF befindet, ist auf eins eingestellt,
- der Diskontinuitätsindikator DI, der sich in dem Anpassungsfeld AF befindet, ist eingestellt,
- wenn die Videokomponente den Zeitgeber des Programms trägt, ist eine Referenzzeitangabe (PCR), die gemäß der oder den vorhergehenden Referenzzeitangaben PCR derselben Komponente berechnet wurde, in dem Anpassungsfeld AF eingestellt.

12. Verfahren nach Anspruch 10, in dem Fall, dass der Präsentationszeitstempel nicht in dem Header des PES-Pakets, das den Sequenzheader enthält, vorhanden ist, **dadurch gekennzeichnet, dass** es darin besteht, eine Vorbehandlung zur Einstellung des RAI-Indikators durchzuführen, und dass das anfängliche Transportpaket PT derart verändert wird, dass sein PUSI-Indikator auf 0 eingestellt wird und die verwendbaren Daten aus dem Header des PES-Pakets entfernt werden, wobei das Transportpaket PT, das eingefügt ist, um den RAI-Indikator einzustellen, dann folgende Merkmale aufweist:
- der PUSI-Indikator ist auf eins eingestellt,
- der Wert des Kontinuitätszählers COMP ist auf den Wert des Kontinuitätszählers des anfänglichen Transportpakets PT minus eins eingestellt,
- das Kontrollfeld (AFC) des Anpassungsfeldes (AF) ist auf den Binärwert 11 eingestellt, der bedeutet, dass ein Anpassungsfeld AF und ein verwendbarer Teil in diesem Transportpaket vorhanden sind,
- das Anpassungsfeld (AF) weist einen RAI-Indikator auf, der auf eins eingestellt ist,
- der Diskontinuitätsindikator ist in diesem Paket mit dem RAI-Indikator auf eins eingestellt,
- eine Referenzzeitangabe (PCR), die gemäß der oder den vorhergehenden Referenzzeitangaben PCR derselben Komponente berechnet wurde, ist in dem Anpassungsfeld AF eingestellt, wenn die Videokomponente den Taktgeber des Programms trägt,
- ein Präsentationszeitstempel (PTS) wird berechnet und in dem verwendbaren Teil dieses Pakets eingestellt,
- der Header des PES-Pakets, der sich in dem ersetzten Transportpaket PT befand, wird in den verwendbaren Teil dieses eingefügten Transportpakets PT verschoben, und in dem Fall, dass der Präsentationszeitstempel (PTS) nicht in dem Header des PES-Pakets vorhanden ist, wird dieser PTS-Stempel berechnet und in den Headerdaten dieses PES-Pakets eingestellt.
